# EUROPÄISCHE PATENTSCHRIFT

(11) **EP 2 886 495 B1**
(45) Veröffentlichungstag und Bekanntmachung des Hinweises auf die Patenterteilung: **04.01.2017**
(21) Anmeldenummer: 14193596.5
(22) Anmeldetag: 18.11.2014
(51) Int. Cl.: B65G 43/10, B65G 47/26, B65G 1/02

(54) **Rollenbahn mit parallel nebeneinander angeordneten Rolleneinheiten**
Roller conveyor with parallel roller units
Convoyeur à rouleaux ayant des rouleaux disposés parallèlement les uns à côté des autres

(30) Priorität: 20.12.2013 DE 102013226971
(43) Veröffentlichungstag der Anmeldung: 24.06.2015
(73) Patentinhaber: BITO-Lagertechnik Bittmann GmbH, 55590 Meisenheim (DE)
(72) Erfinder: Nothof, Christian, 55590 Meisenheim (DE)
(74) Vertreter: Richardt Patentanwälte PartG mbB

(56) Entgegenhaltungen:
- EP-A2- 1 142 808
- DE-A1-102004 038 135
- US-A1- 2012 160 637

## Beschreibung

Die Erfindung betrifft eine Rollenbahn nach dem Oberbegriff des Anspruchs 1 mit parallel nebeneinander angeordneten Rolleneinheiten, ein Verfahren nach dem Oberbegriff des Anspruchs 15 zur Steuerung einer Rollenbahn und ein Lagerregal nach dem Oberbegriff des Anspruchs 14.

Rollenbahnen sind aus dem Stand der Technik bekannt und dienen der Beförderung von Stückgut. Rollenbahnen bestehen dabei aus einer Vielzahl nebeneinander angeordneter drehbarer Rollen, wobei zum Beispiel aufgrund des Schwungs des Stückguts, eines Antriebs der Rollen und/oder einer leicht abschüssigen Erstreckung der Rollenbahnen ein "Gleiten" des Stückguts über die Rollen und damit eine Beförderung ermöglicht wird. Rollenbahnen sind auch unter dem Begriff des Rollenförderers bekannt.

Stückgut, wie beispielsweise Kisten, Kartons oder Paletten, können über die Rollenbahn transportiert werden, um dadurch von einem Ort zum anderen befördert zu werden.

Um nun den Transport von Fördergut oder Stückgut auf den Rollen zu steuern, ist es aus dem Stand der Technik beispielsweise die Verwendung von Sensorbrücken bekannt. Hierzu offenbart die DE 10 2005 047 977 A1 eine Rollenbahn mit parallel zueinander angeordneten und durch einen Antrieb rotierbaren Rollen zum Transport von Fördergütern entlang einer Förderrichtung quer zu den Rollenachsen, wobei zwischen zwei Rollen eine quer zur Förderrichtung verlaufende Sensorbrücke mit zumindest einem Sensorelement zur Detektierung eines Förderguts vorgesehen ist.

Die DE 10 2004 038 135 A1 offenbart eine Rollenbahn nach dem Oberbegriff des Anspruchs 1 und ein Verfahren zur Steuerung einer Rollenbahn nach dem Oberbegriff des Anspruchs 15.

Der Erfindung liegt die Aufgabe zugrunde, eine verbesserte Rollenbahn, ein verbessertes Verfahren zur Steuerung einer Rollenbahn und ein entsprechendes Computerprogrammprodukt sowie ein Lagerregal mit einer Lagerfläche für Fördergut, wobei die Lagerfläche eine solche Rollenbahn umfasst, zu schaffen.

Die der Erfindung zugrunde liegende Aufgaben werden durch die Merkmale der unabhängigen Patentansprüche gelöst. Bevorzugte Ausführungsformen der Erfindung sind in den abhängigen Patentansprüchen angegeben.

Es wird eine Rollenbahn mit parallel nebeneinander angeordneten Rolleneinheiten zum Fördern von Fördergut geschaffen, wobei jeder der Rolleneinheiten ein Steuermodul zugeordnet ist,
- wobei jeder der Rolleneinheiten ein Sensor zur Abgabe eines Signals zugeordnet ist, wobei das Signal einen ersten Signalzustand im Falle des Vorhandenseins und einen zweiten Signalzustand im Falle des Nicht-Vorhandenseins des Förderguts an einer Sensorposition relativ zu der Rolleneinheit ist, zu welcher der Sensor zugeordnet ist, wobei eine gegebene Rolleneinheit oder der Sensor der gegebenen Rolleneinheit dazu ausgebildet ist,
   ∘ das Signal dem dieser gegebenen Rolleneinheit zugeordneten Steuermodul bereitzustellen,
   ∘ das Signal dem Steuermodul jener hinteren Rolleneinheit bereitzustellen, welche entgegen der Transportrichtung der Rollenbahn gesehen jene Rolleneinheit ist, welche unmittelbar vor der gegebenen Rolleneinheit an der Rollenbahn angeordnet ist,
   ∘ das Signal dem Steuermodul jener vorderen Rolleneinheit bereitzustellen, welche in Richtung der Transportrichtung der Rollenbahn gesehen jene Rolleneinheit ist, welche unmittelbar vor der gegebenen Rolleneinheit an der Rollenbahn angeordnet ist,
- wobei das Steuermodul (200) einer gegebenen Rolleneinheit (116) zur Abgabe eines Steuersignals an ein Steuermodul (200) der zu dieser gegebenen Rolleneinheit (116) vorderen Rolleneinheit, (116) ausgebildet ist, wobei das Steuersignal ausschließlich dann den ersten Signalzustand aufweist, wenn gegenwärtig das Signal des Sensors (110), welcher zu dieser gegebenen Rolleneinheit (116) zugeordnet ist, den ersten Signalzustand aufweist und wenn das Signal des Sensors (110), welcher zu dieser gegebenen Rolleneinheit (116) vorderen Rolleneinheit (116) zugeordnet ist, den zweiten Signalzustand aufweist,
- wobei das Steuermodul einer Rolleneinheit dazu ausgebildet ist, einen Bewegungsvorgang von Rollen dieser Rolleneinheit zu steuern, wobei bezüglich einer gegebenen Rolleneinheit der Bewegungsvorgang steuerbar ist, in Abhängigkeit von
   ∘ dem Signal des Sensors, welcher zu dieser gegebenen Rolleneinheit zugeordnet ist,
   ∘ dem Signal des Sensors, welcher der zu dieser gegebenen Rolleneinheit vorderen Rolleneinheit zugeordnet ist,
   ∘ dem Signal des Sensors, welcher der zu dieser gegebenen Rolleneinheit hinteren Rolleneinheit zugeordnet ist,
- wobei die Steuerung des Bewegungsvorgangs eine Drehung einer oder mehrerer Rollen dieser gegebenen Rolleneinheit umfasst, wenn ∘ das Signal des Sensors, welcher zu dieser gegebenen Rolleneinheit zugeordnet ist, den ersten Signalzustand aufweist,
   ∘ das Signal des Sensors, welcher zu dieser gegebenen Rolleneinheit vorderen Rolleneinheit zugeordnet ist, den zweiten Signalzustand aufweist und
   ∘ das Signal des Sensors, welcher zu dieser gegebenen Rolleneinheit hinteren Rolleneinheit zugeordnet ist, den ersten Signalzustand oder den zweiten Signalzustand aufweist,
- wobei die Steuerung des Bewegungsvorgangs der gegebenen Rolleneinheit (116) in Abhängigkeit von dem Signal des Sensors (110), welcher der zu dieser gegebenen Rolleneinheit (116) hinteren Rolleneinheit (116) zugeordnet ist, eine Steuerung des Bewegungsvorgangs der gegebenen Rolleneinheit (116) in Abhängigkeit von dem Steuersignal des Steuermoduls (200) der zu dieser gegebenen Rolleneinheit (116) hinteren Rolleneinheit (116) umfasst.

Hierbei kann die Zuordnung eines Sensors zu einer Rolleneinheit verschiedener Gestalt sein. Zum Beispiel könnte die Rolleneinheit selbst den Sensor aufweisen oder der Sensor ist in der Nähe der Rolleneinheit angeordnet. Im Fall zum Beispiel eines optischen Sensors würde es genügen, wenn im Bereich der Rolleneinheit durch diesen Sensor optisch detektiert werden kann, ob Fördergut auf der Rolleneinheit vorhanden ist oder nicht. Dies könnte zum Beispiel durch eine Art Lichtschranke realisiert werden. In diesem Fall wäre es nicht wesentlich, ob der zugehörige Sensor jetzt an einer Rolle selbst oder irgendwo seitlich versetzt zu dieser angeordnet ist.

Das Steuermodul kann sowohl eine prozessorgesteuerte Auswertelogik umfassen oder aber vorzugsweise durch einfache Relais realisiert sein, welche durch entsprechende Verdrahtung mit den Sensoren verschiedene Möglichkeiten der Ansteuerung der Rollen für deren Veränderung des Drehverhaltens bereitstellen.

Ausführungsformen der Erfindung könnten den Vorteil haben, dass mit Bereitstellung dieser Rollenbahnen Fördergut auf der Rollenbahn befördert werden kann, wobei die Art und Weise, wie das Fördergut auf den Rolleneinheiten zu liegen kommt, in einfacher Weise gesteuert werden kann. Die Rollenbahn bietet dabei eine hohe Positioniergenauigkeit des Förderguts, da die Positioniergenauigkeit des Förderguts weitestgehend unabhängig vom Schlupf ist. Außerdem kann die Rollenbahn mit Fördergut unterschiedlicher Länge zurechtkommen, da die Länge des Förderguts nicht parametriert werden muss. Durch die beschriebene Verschaltung und Logik ist es möglich, Fördergut auf der Rollenbahn ohne eine zuvor aufwändige exakte geometrische relative Anordnung von Sensoren und Rolleneinheiten beziehungsweise einer aufwendigen Umprogrammierung einer Verschaltung zu befördern. Außerdem kann durch die einfache Art der Signalweitergabe von Steuermodul zu Steuermodul auf ein aufwendiges Bussystem verzichtet werden.

Nach einer Ausführungsform der Erfindung umfasst die Steuerung des Bewegungsvorgangs eine Drehung einer oder mehrerer Rollen dieser gegebenen Rolleneinheit, wenn
∘ das Signal des Sensors, welcher zu dieser gegebenen Rolleneinheit zugeordnet ist, den zweiten Signalzustand aufweist,
∘ das Signal des Sensors, welcher zu dieser gegebenen Rolleneinheit vorderen Rolleneinheit zugeordnet ist, den ersten Signalzustand aufweist und
∘ das Signal des Sensors, welcher zu dieser gegebenen Rolleneinheit hinteren Rolleneinheit zugeordnet ist, den ersten Signalzustand aufweist,
und/oder
wobei die Steuerung des Bewegungsvorgangs eine Drehung einer oder mehrerer Rollen dieser gegebenen Rolleneinheit umfasst, wenn
   ∘ das Signal des Sensors, welcher zu dieser gegebenen Rolleneinheit zugeordnet ist, den zweiten Signalzustand aufweist,
   ∘ das Signal des Sensors, welcher zu dieser gegebenen Rolleneinheit vorderen Rolleneinheit zugeordnet ist, den zweiten Signalzustand aufweist und
   ∘ das Signal des Sensors, welcher zu dieser gegebenen Rolleneinheit hinteren Rolleneinheit zugeordnet ist, den ersten Signalzustand aufweist.

Nach einer Ausführungsform der Erfindung umfasst die Steuerung des Bewegungsvorgangs einen Stoppvorgang einer Drehung einer oder mehrerer Rollen dieser gegebenen Rolleneinheit, wenn
∘ das Signal des Sensors, welcher zu dieser gegebenen Rolleneinheit zugeordnet ist, den zweiten Signalzustand aufweist,
∘das Signal des Sensors, welcher zu dieser gegebenen Rolleneinheit vorderen Rolleneinheit zugeordnet ist, den zweiten Signalzustand aufweist und
∘ das Signal des Sensors, welcher zu dieser gegebenen Rolleneinheit hinteren Rolleneinheit zugeordnet ist, den zweiten Signalzustand aufweist
und/oder
- wobei die Steuerung des Bewegungsvorgangs einen Stoppvorgang einer Drehung einer oder mehrerer Rollen dieser gegebenen Rolleneinheit umfasst, wenn
   ∘ das Signal des Sensors, welcher zu dieser gegebenen Rolleneinheit zugeordnet ist, den zweiten Signalzustand aufweist,
   ∘ das Signal des Sensors, welcher zu dieser gegebenen Rolleneinheit vorderen Rolleneinheit zugeordnet ist, den ersten Signalzustand aufweist und
   ∘ das Signal des Sensors, welcher zu dieser gegebenen Rolleneinheit hinteren Rolleneinheit zugeordnet ist, den zweiten Signalzustand aufweist.
und/oder
- wobei die Steuerung des Bewegungsvorgangs einen Stoppvorgang einer Drehung einer oder mehrerer Rollen dieser gegebenen Rolleneinheit umfasst, wenn
   ∘ das Signal des Sensors, welcher zu dieser gegebenen Rolleneinheit zugeordnet ist, den ersten Signalzustand aufweist,
   ∘ das Signal des Sensors, welcher zu dieser gegebenen Rolleneinheit vorderen Rolleneinheit zugeordnet ist, den ersten Signalzustand aufweist und
   o das Signal des Sensors, welcher zu dieser gegebenen Rolleneinheit hinteren Rolleneinheit zugeordnet ist, den zweiten Signalzustand oder den ersten Signalzustand aufweist.

Insgesamt kann durch eine solche Art der Logiksteuerung und entsprechenden Verschaltung gewährleistet werden, dass sämtliche möglichen Szenarien von Rollenantrieb und Fördergutdetektion durch die Sensoren vollständig durch lediglich sechs verschiedene Logikkombinationen für ein gegebenes Steuermodul berücksichtigt werden können. Dadurch ist es möglich, entsprechende Steuermodule technisch mit wenig Aufwand und einfacher Implementierung aufzubauen. Dies reduziert die Fehleranfälligkeit von solchen Steuermodulen beträchtlich.
Bezüglich des Stoppvorgangs sei angemerkt, dass dies den Vorteil bieten könnte, dass losgelöst von der tatsächlichen Transportgeschwindigkeit des Förderguts über die Rollenbahn und losgelöst von jeglichem Schlupf beim Anlaufen von Rollen der Rolleneinheit, zur Kraftübertragung zum Befördern des Förderguts über die Rollenbahn das Fördergut immer an vordefinierten Positionen auf der Rollenbahn zu stehen kommt. Einzige Voraussetzung könnte hierbei sein, dass im Falle entsprechender Sensorsignale und einem Stoppvorgang der Drehung der einen oder mehreren Rollen einer gegebenen Rolleneinheit gewährleistet sein müsste, dass das Fördergut innerhalb einer bestimmten Weglänge auch tatsächlich zum Stehen kommt. Diese Voraussetzung könnte die durch Reibung vermittelte Kraftübertragung zwischen den einzelnen Förderrollen und dem Fördergut betreffen, sowie die Frage, wie eine einzelne Förderrolle zum Stillstand gebracht wird. Grundsätzlich ist es durch die obig beschriebene Logik möglich, das Fördergut in vordefinierter Weise über die Rollenbahn zu transportieren.

Zum Beispiel weist das Steuermodul einer gegebenen Rolleneinheit drei Signaleingänge und zwei Signalausgänge auf, wobei die drei Signaleingänge ausgebildet sind zum Empfang des Signals des Sensors, welcher zu dieser gegebenen Rolleneinheit zugeordnet ist, Empfang des Signals des Sensors, welcher zu dieser gegebenen Rolleneinheit vorderen Rolleneinheit zugeordnet ist und zum Empfang des Steuersignals des Steuermoduls, welches zu dieser gegebenen Rolleneinheit hinteren Rolleneinheit zugeordnet ist. Ferner sind die Signalausgänge ausgebildet zum Bereitstellen des Signals des Sensors, welcher zu dieser gegebenen Rolleneinheit zugeordnet ist, an die Steuereinheit, an die Steuereinheit der zu dieser gegebenen Rolleneinheit hinteren Rolleneinheit, Bereitstellen des Steuersignals des Steuermoduls, welches zu dieser gegebenen Rolleneinheit zugeordnet ist, an die Steuereinheit, welches zu dieser gegebenen Rolleneinheit vorderen Rolleneinheit zugeordnet ist.

Werden ausschließlich die reinen Sensorsignale verwendet, könnte dies eine zusätzliche Logiküberprüfung wie folgt erfordern:
Im Falle dessen, dass
   - das Signal des Sensors, welches zu einer gegebenen Rolleneinheit zugeordnet ist, den ersten Signalzustand aufweist,
   - das Signal des Sensors, welches zu dieser gegebenen Rolleneinheit vorderen Rolleneinheit zugeordnet ist, ebenfalls den ersten Signalzustand aufweist und
   - das Signal des Sensors, welches zu dieser gegebenen Rolleneinheit hinteren Rolleneinheit zugeordnet ist, auch den ersten Signalzustand aufweist,
müsste die Steuerung des Bewegungsvorgangs einen Stoppvorgang einer Drehung einer oder mehrerer Rollen dieser gegebenen Rolleneinheiten umfassen. Denn in diesem Fall würde sich auf der gegebenen Rolleneinheit Fördergut befinden, vor der gegebenen Rolleneinheit Fördergut befinden und hinter der gegebenen Rolleneinheit Fördergut befinden. Eine weitere Überprüfung könnte die Steuerung des Bewegungsvorgangs einer Drehung einer oder mehrerer Rollen dieser gegebenen Rolleneinheit umfassen, wenn
   - das Signal des Sensors, welches zu dieser gegebenen Rolleneinheit zugeordnet ist, den ersten Signalzustand aufweist,
   - das Signal des Sensors, welches zu dieser gegebenen Rolleneinheit vorderen Rolleneinheit zugeordnet ist, den zweiten Signalzustand aufweist,
   - und das Signal des Sensors, welches zu dieser gegebenen Rolleneinheit hinteren Rolleneinheit zugeordnet ist, ebenfalls den zweiten Signalzustand aufweist.

In diesem Fall könnte die Steuerung des Bewegungsvorgangs eine Drehung der einen oder mehreren Rollen dieser gegebenen Rolleneinheit umfassen.

Damit könnten sich insgesamt für die Steuereinheit die Implementierung von acht Logikzuständen ergeben, was jedoch nach wie vor die obig beschriebenen Vorteile bezüglich des einfachen Transports von Fördergut über die Rollenbahn ermöglicht.

Im Falle der beschriebenen Erfindung, bei welcher statt der Bereitstellung des Signal des Sensors, welches dieser gegebenen Rolleneinheit zugeordnet ist und die Steuereinheit zu dieser gegebenen Rolleneinheit vorderen Rolleneinheit die Übermittlung eines Steuersignals umfasst, könnten sich demgegenüber weitere Vorteile ergeben:
Zunächst könnten hierzu die obig beschriebenen sechs Logikkombinationen zur Steuerung genügen, sodass diesbezüglich die Auswertung der Sensorsignale einfach gehalten werden kann. Lediglich ein zusätzliches Auswertungskriterium in Form zum Beispiel einer Logikschaltung ist notwendig, um zu bestimmen, ob das Steuersignal in Form des ersten Signalzustands oder des zweiten Signalzustands an die zu einer gegebenen Rolleneinheit vorderen Rolleneinheit zu übermitteln ist. Während also die erste Alternative insgesamt acht Logikoperationen benötigt, kommt die zweite Alternative mit maximal sieben Logikoperationen aus. Dies könnte den technischen Aufbau der Rollenbahn vereinfachen.

Nach einer Ausführungsform der Erfindung ist der Sensor einer gegebenen Rolleneinheit in Transportrichtung gesehen vor der gegebenen Rolleneinheit angeordnet. Damit könnte gewährleistet sein, dass die Rollenbahn auch für einen Querdurchlauf von Fördergut, insbesondere von Paletten, geeignet ist. Würde in diesem Fall der Sensor an einer anderen Position relativ zur gegebenen Rolleneinheit angeordnet sein, müsste im Falle des Querdurchlaufs von Paletten mit aufwendigen Messmethoden bestimmt werden, welche der Palettenkufen nun gerade das Sensorsignal ausgelöst hat. Denn auch in diesem Fall müsste sichergestellt sein, dass eine Palette nicht auf eine vor dieser Palette befindliche weitere Palette aufläuft.

Nach einer Ausführungsform der Erfindung ist das Signal des einer Rolleneinheit zugeordneten Sensors abfallverzögert bereitstellbar, wenn das Signal den ersten Signalzustand aufweist. Z.B. wird das Signal des einer Rolleneinheit zugeordneten Sensors für einen vorbestimmten Zeitraum aufrechterhalten, obwohl der Sensor nicht mehr die Anwesenheit des Förderguts detektiert. Auch dies könnte die Fördermöglichkeit von Fördergut in Querdurchlauf mit mehreren hintereinander angeordneten Laufflächen (zum Beispiel Palettenkufen) ermöglichen. Nachdem eine Palettenkufe den Sensorbereich verlassen hat, wird dennoch das Sensorsignal abfallverzögert für einen vordefinierten Zeitraum aufrechterhalten und somit der nachfolgenden Palettenkufe derselben Palette ermöglicht, das Sensorsignal erneut auszulösen.

So weist zum Beispiel das Fördergut in der Transportrichtung gesehen mehrere hintereinander angeordnete Laufflächen auf, wobei das Fördergut über die Laufflächen auf der Rollenbahn abstützbar und förderbar ist. In diesem Fall umfasst der Bewegungsvorgang und der Stoppvorgang eine Kraftübertragung von den Rollen der Rolleneinheit in einem räumlichen Bereich der Rolleneinheit auf das Fördergut über die Laufflächen. Die Abfallverzögerung ist vorzugsweise so ausgebildet, dass nachdem eine einzelne der Laufflächen die Sensorposition der gegebenen Rolleneinheit verlassen hat, so lange der ersten Signalzustand des Sensors der gegebenen Rolleneinheit aufrechterhalten wird, bis die unmittelbar hinter dieser einzelnen Lauffläche vorhandene Lauffläche dieses Förderguts in den vordefinierten Bereich der gegebenen Rolleneinheit eintritt, welcher durch den Sensor der gegebenen Rolleneinheit erfassbar ist. Die Abfallverzögerung ist dabei vorzugsweise grundsätzlich aktiv, unabhängig davon, ob der einzelnen Lauffläche auch tatsächlich eine weitere Lauffläche desselben Förderguts nachfolgt.

Die Abfallverzögerung kann beispielsweise durch einen Zeitgeber in Form einer konstanten Zeitdauer, über welche der erste Signalzustand aufrechterhalten wird, bereitgestellt werden.

Es sei angemerkt, dass die Abfallverzögerung durch den Sensor selbst gewährleistet sein kann. Möglich ist jedoch auch, dass in der jeweiligen Steuereinheit, welche mit dem Sensorsignal arbeitet, die Abfallverzögerung berücksichtigt wird. Im letzteren Fall würde bei Signalabfall durch die Steuereinheit weiter der der erste Signalzustand des Signals simuliert oder angenommen werden.

Nach einer Ausführungsform der Erfindung umfasst jede der Rolleneinheiten eine durch das Steuermodul der jeweiligen Rolleneinheit steuerbare Rolle, wobei diese steuerbare Rolle eine Antriebsrolle und/oder eine Bremsrolle umfasst. Vorzugsweise kommen hier solche steuerbaren Rollen zum Einsatz, welche sowohl eine Antriebs- als auch eine Bremsfunktion aufweisen und damit die Geschwindigkeit, mit welcher das Fördergut über sie hinweggleitet, exakt regulieren können. Ferner könnten zum Beispiel diese Rollen so ausgebildet sein, dass die Bremswirkung der Rollen automatisch im stromlosen Zustand des Rollenantriebs einsetzt. Dies könnte eine Sicherheit bei Stromausfall gewährleisten, da dann trotz einer etwaigen Abschüssigkeit der Rollenbahn gewährleistet ist, dass alles Fördergut sicher auf der Rollenbahn zum Stehen kommt und sie nicht weiterbewegen kann.

Nach einer Ausführungsform der Erfindung umfasst jede der Rolleneinheiten ferner mehrere erste Tragrollen, wobei bezüglich einer gegebenen Rolleneinheit deren erste Tragrollen mechanisch mit der steuerbaren Rolle gekoppelt sind, wobei aufgrund der mechanischen Kopplung das Drehverhalten der gekoppelten ersten Tragrollen identisch ist mit dem Drehverhalten der steuerbaren Rolle, wobei der Bewegungsvorgang und der Stoppgang eine Kraftübertragung von den Rollen der Rolleneinheit in einem räumlichen Bereich der Rolleneinheit auf das Fördergut über die Laufflächen umfasst, wobei die steuerbare Rolle und die mehreren Tragrollen für die Kraftübertragung ausgebildet sind. Durch diese mechanische Kopplung kann die Wirkfläche vergrößert werden, welche auf das Fördergut die Kraft ausübt, um das Fördergut in der Förderrichtung zu bewegen. Insbesondere bei einem Querdurchlauf von Paletten könnte dies hilfreich sein, da ja in diesem Fall die Palettenkufen immer nur für eine kurze Zeit mit der eigentlich angetriebenen steuerbaren Rolle in Kontakt kommen würden. Durch die besagte Verlängerung der Wirkfläche wird diese Zeitdauer erhöht und es könnte vermieden werden, dass eine Palette mit ihren Kufen genau zwischen benachbarten, nicht angetriebenen Rollen zum Stehen kommt.

Nach einer Ausführungsform der Erfindung umfasst der Bewegungsvorgang und der Stoppvorgang eine Kraftübertragung von den Rollen der Rolleneinheit in einem räumlichen Bereich der Rolleneinheit auf das Fördergut, wobei das Fördergut in der Transportrichtung gesehen mehrere hintereinander angeordnete Laufflächen, wie zum Beispiel Palettenkufen, aufweist, wobei das Fördergut über die Laufflächen auf der Rollenbahn abstützbar und förderbar ist. In diesem Fall ist vorzugsweise in der Transportrichtung gesehen die Erstreckungslänge des räumlichen Bereichs größer als der Abstand zwischen zwei benachbarten Laufflächen der mehreren Laufflächen. Insbesondere genau hierdurch könnte das besagte Szenario vermieden werden, dass eine Palette mit ihren Kufen genau zwischen zwei benachbarten steuerbaren Rollen zum Stehen kommt und nicht weiter transportiert werden kann.

Nach einer Ausführungsform der Erfindung umfasst die Rollenbahn ferner nicht angetriebene zweite Tragrollen, wobei einander benachbarte Rolleneinheiten durch die zweite Tragrollen voneinander beabstandet sind. Dies könnte die Kosten der Rollenbahn minimieren, da üblicherweise angetriebene Rollen aufgrund der notwendigen Mechanik teurer sind als nicht angetriebene reine (zweite) Tragrollen. Durch genaue Dimensionierung des räumlichen Bereichs der Rolleneinheit, in welchem die Kraftübertragung für das Fördergut stattfindet, ist es möglich, in Abhängigkeit von der Art des Fördergutdurchlaufs (Längs- oder Querdurchlauf) und dem in Transportrichtung gesehenen Abstand der Laufflächen des Förderguts eine oder mehrere der zweiten Tragrollen zwischen einander benachbarten Rolleneinheiten anzuordnen. Diese stützen dann von unten den Transportvorgang des Förderguts über die Rollenbahn, ohne dass die grundsätzliche Funktionsweise der Rollenbahn in irgendeiner Form beeinträchtigt wird.

Nach einer Ausführungsform der Erfindung wird dem Steuermodul der Rolleneinheit an einer Entnahmeposition der Rollenbahn ein Signal des Sensors, welche der zu dieser gegebenen Rolleneinheit vorderen Rolleneinheit zugeordnet ist, ein fiktives Signal bereitgestellt, wobei das fiktive Signal permanent den ersten Signalzustand aufweist. Damit könnte sichergestellt werden, dass bei Auslaufen des Förderguts auf die Rolleneinheit an der Entnahmeposition der Rollenbahn das Fördergut grundsätzlich an der Entnahmeposition zum Stillstand kommt. Das Fördergut wird also nur so weit gefördert, bis es vollständig die Entnahmeposition eingenommen hat.

Nach einer Ausführungsform der Erfindung umfasst die Rollenbahn ferner einen zusätzlichen Sensor an der Rolleneinheit an einer Zuführposition der Rollenbahn zur Abgabe eines Signals, wobei dieses Signal den ersten Signalzustand im Falle des Vorhandenseins und den zweiten Signalzustand im Falle des Nichtvorhandenseins des Förderguts an einer Sensorposition relativ zu der Rolleneinheit aufweist, zu welcher der zusätzliche Sensor zugeordnet ist, wobei dem Steuermodul der Rolleneinheit und der Zuführposition ein Signal des Sensors, welcher der zu dieser gegebenen Rolleneinheit hinteren Rolleneinheit zugeordnet ist, das Signal dieses zusätzlichen Sensors bereitgestellt wird. Dieses Signal kann dabei als reines Sensorsignal mit dem ersten Signalzustand oder dem zweiten Signalzustand bereitgestellt werden, oder es kann wieder in Form eines Steuersignals dem vorangehenden Steuermodul bereitgestellt werden. Im letzteren Fall weist das Steuersignal den ersten Signalzustand auf, wenn das Sensorsignal den ersten Signalzustand aufweist und es weist den zweiten Signalzustand auf, wenn das Sensorsignal den zweiten Signalzustand aufweist.

Vorzugsweise ist der Abstand zwischen dem zusätzlichen Sensor und dem Sensor der Rolleneinheit und der Zuführposition der Rollenbahn größer als die in der Transportrichtung gesehene Erstreckungslänge des Förderguts. Letzteres könnte den Vorteil haben, dass beim Absetzen des Förderguts auf die Zuführposition die Genauigkeit des Absetzvorgangs minimiert werden kann. In anderen Worten könnte also das Fördergut irgendwo im Bereich der Zuführposition auf der Rollenbahn abgesetzt werden. Daraufhin wird aufgrund der Betätigung des zusätzlichen Sensors automatisch das Fördergut auf die optimale Förderposition durch die hinterste Rolleneinheit weiter transportiert, bis der reguläre Sensor dieser hinteren Rolleneinheit ein Sensorsignal mit dem ersten Signalzustand abgibt. Anschließend können ausgehend von dieser optimalen Anfangsposition die weiteren Logik-Überprüfungsschritte vorgenommen werden, wie sie obig beschrieben sind.

Zum Beispiel handelt es sich bei dem Sensor der Rolleneinheit und/oder dem zusätzlichen Sensor um einen Druckschalter. Jedoch ist auch die Verwendung anderer Arten von Schalter möglich, wie zum Beispiel induktiver Näherungsschalter oder optischer Schalter.

Nach einer Ausführungsform der Erfindung wird durch die Rollenbahn eine Lagerfläche eines Lagerregals für das Fördergut gebildet. Die Rollenbahn ist also nicht Teil einer Fördervorrichtung (keine Fördertechnik), sondern Teil eines Lagerregals insbesondere mit Gefälle. Zum Beispiel ist die Rollenbahn in einem Regal als Lagerfläche eingebaut. Ferner kann zum Beispiel durch die Rollenbahn ein Lagerkanal eines Kanallagers gebildet werden. Dadurch könnte es möglich sein, das Lager von einer Seite durch Aufbringen von Lagergut auf die Rollenbahn zu beschicken und bei Bedarf auf der in der Transportrichtung gegenüberliegenden Seite das Lagergut nach und nach zu entnehmen.
Nach einer Ausführungsform der Erfindung ist die Steuerung des Bewegungsvorgangs der Rollen so ausgebildet, dass das Fördergut unabhängig von seinem Gewicht mit einer vordefinierten Geschwindigkeit in der Transportrichtung bewegt werden kann.

Nach einer Ausführungsform der Erfindung ist die Steuerung des Bewegungsvorgangs der Rollen so ausgebildet, dass bezüglich einer gegebenen Rolleneinheit die aufgrund der Drehung der Rollen und dem Fördergut bereitgestellte Translationsenergie des Förderguts zusammen mit der aufgrund der auf das Fördergut wirkenden Hangabtriebskraft und daraus resultierenden kinetischen Energie gerade ausreicht, um das Fördergut in der Transportrichtung von der gegebenen Rolleneinheit zu der zu dieser gegebenen Rolleneinheit vorderen Rolleneinheit zu bewegen. Damit könnte zunächst eine definierte Bewegung des Förderguts über die Rollenbahn gewährleistet sein, da die kinetische Energie des Förderguts in vordefinierter Weise begrenzt ist. Auch dies könnte eine hohe Sicherheit beim Transport des Förderguts gewährleisten. Außerdem werden hierdurch die auf eine der Rollen der Rollenbahn wirkenden Kräfte beim Auflaufen des Förderguts auf eine solche, insbesondere angetriebene Rolle minimiert. Hintergrund ist, dass vorzugsweise sämtliche angetriebenen Rollen leicht erhöht in Richtung der Lauffläche des Förderguts in der Rollenbahn angeordnet sind, um damit eine maximale Kraftübertragung von der angetriebenen Rolle auf das Fördergut zu gewährleisten. Angetriebene Rolle meint in diesem Fall sowohl positiv als auch negativ angetrieben, das heißt sowohl mit Beschleunigung und/oder mit Bremsfunktion. In dem beschriebenen Fall ist eine Funktion der Rollenbahn zum Transport des Förderguts vorzugsweise nur bei vorhandenem Gefälle möglich.

Es sei angemerkt, dass Antriebsrollen dann von Vorteil sind, wenn zum Beispiel die angetriebenen Rollen durch mehrere nicht angetriebene Tragrollen beabstandet sind, wobei die nicht angetriebenen Tragrollen frei von einer Antriebs- oder Bremsfunktion sind. In diesem Fall kann insgesamt die Rollenbahn leicht abschüssig angeordnet sein, sodass durch die angetriebenen Rollen das Fördergut zum Gleiten über die mehreren nicht angetriebenen Tragrollen angeschoben wird. Dies bedeutet, dass durch die angetriebenen Rollen das Fördergut den benötigten Schwung erhält.

Im Falle einer stark abschüssigen Rollenbahn könnte es ausreichen, dass die angetriebenen Rollen mit einer reinen Bremsfunktion ausgestattet sind, sodass dafür gesorgt werden kann, dass ein gewisser Mindestabstand beim Gleiten des Förderguts auf der Rollenbahn zum benachbarten Fördergut eingehalten wird.

Die Bremsfunktion könnte hierbei eine Bewegung des Förderguts auch vollständig in der Förderung aufhalten.

Nach einer Ausführungsform der Erfindung umfasst für eine gegebene Rolleneinheit der Bewegungsvorgang und der Stoppvorgang eine Kraftübertragung von den Rollen der Rolleneinheit in einem räumlichen Bereich der Rolleneinheit über eine Lauffläche auf das Fördergut, wobei in der Richtung der Transportrichtung der Rollenbahn gesehen der Abstand des Mittelpunkts des räumlichen Bereichs der Rolleneinheit von der Sensorposition des Sensors diese Rolleneinheit der halben Erstreckungslänge des Förderguts, gesehen in der Transportrichtung der Rollenbahn, entspricht.

Damit könnte der Transport des Förderguts über die Rollenbahn zuverlässiger gestaltet werden: Die Häufigkeit eines Stillstands des Förderguts auf der Rollenbahn erfolgt üblicherweise an jenen Positionen, bei welchen die in Transportrichtung gesehene Förderkante des Förderguts gerade die Sensorposition erreicht hat. Um nun aus diesem Stillstand heraus das Fördergut weiter auf die nächste Rolleneinheit weiter zu befördern ist eine Kraftübertragung von der gegenwärtigen Rolleneinheit auf das Fördergut notwendig. Um diese Kraftübertragung zu maximieren ist es hilfreich, dass die Anpresskraft, mit welcher das Fördergut auf die Rolleneinheit aufgepresst wird, maximal ist, um eine optimale Kraftübertragung zwischen Rolleneinheit und Fördergut zu ermöglichen. Dadurch, dass nun der Abstand des Mittelpunkts des räumlichen Bereichs der Rolleneinheit von der Sensorposition des Sensors eine halbe Erstreckungslänge des Förderguts entfernt ist, ist diesem Aspekt Rechnung getragen. Dadurch wird das Anlaufverhalten des Förderguts auf der Rollenbahn optimiert.

Nach einer Ausführungsform der Erfindung sind die steuerbare Rolle und optional die gekoppelten ersten Tragrollen der Rolleneinheiten gegenüber der Lauffläche der zweiten Tragrollen nach oben in Richtung des zu fördernden Förderguts abgehoben. Wie bereits oben erwähnt, könnte dies unterstützen, dass die Kraft, mit welcher die Bewegung des Förderguts auf der Rollenbahn reguliert wird, maximiert wird. Denn die Rollen, welche die Bewegung des Förderguts auf der Rollenbahn regulieren, haben einen optimalen Kontakt zu dem vorzugsweise hierauf mittig ruhenden Fördergut.

In einem weiteren Aspekt betrifft die Erfindung ein Lagerregal mit einer Lagerfläche für das Fördergut, wobei die Lagerfläche eine Rollenbahn wie obig beschrieben umfasst.

Im Rahmen der gesamten Beschreibung können der erste und der zweite Signalzustand verschiedenen Spannungswerten entsprechen. Z.B. ist der erste Signalzustand ein positives Signal, während der zweite Signalzustand ein negatives Signal oder ein Signal Null ist oder umgekehrt. Die beiden Signalzustände können diskreten Spannungswerten entsprechen.

In einem weiteren Aspekt betrifft die Erfindung ein Verfahren zur Steuerung einer Rollenbahn mit parallel nebeneinander angeordneten Rolleneinheiten zum Fördern von Fördergut, wobei jeder der Rolleneinheiten ein Steuermodul zugeordnet ist
- wobei jeder der Rolleneinheiten ein Sensor zur Abgabe eines Signals zugeordnet ist, wobei das Signal einen ersten Signalzustand im Falle des Vorhandenseins und einen zweiten Signalzustand im Falle des Nicht-Vorhandenseins des Förderguts an einer Sensorposition relativ zu der Rolleneinheit, ist, zu welcher der Sensor zugeordnet ist, wobei das Verfahren bezüglich des Sensors einer gegebenen Rolleneinheit umfasst,
   ∘ Bereitstellen des Signals dem dieser gegebenen Rolleneinheit zugeordneten Steuermodul,
   ∘ Bereitstellen des Signals dem Steuermodul jener hinteren Rolleneinheit, welche entgegen der Transportrichtung der Rollenbahn gesehen jene Rolleneinheit ist, welche unmittelbar vor der gegebenen Rolleneinheit an der Rollenbahn angeordnet ist,
   ∘ Bereitstellen eines Steuersignals an ein Steuermodul (200) der zu dieser gegebenen Rolleneinheit (116) vorderen Rolleneinheit (116), wobei das Steuersignal ausschließlich dann den ersten Signalzustand aufweist, wenn gegenwärtig das Signal des Sensors (110), welcher zu dieser gegebenen Rolleneinheit (116) zugeordnet ist, den ersten Signalzustand aufweist und wenn das Signal des Sensors (110), welcher zu dieser gegebenen Rolleneinheit (116) vorderen Rolleneinheit, (116) zugeordnet ist, den zweiten Signalzustand aufweist,
- wobei das Verfahren eine Steuerung eines Bewegungsvorgangs von Rollen einer Rolleneinheit durch ein Steuermodul umfasst, wobei bezüglich einer gegebenen Rolleneinheit der Bewegungsvorgang gesteuert wird in Abhängigkeit von
   ∘ dem Signal des Sensors, welcher zu dieser gegebenen Rolleneinheit zugeordnet ist,
   ∘dem Signal des Sensors, welcher der zu dieser gegebenen Rolleneinheit vorderen Rolleneinheit zugeordnet ist,
   ∘ dem Signal des Sensors, welcher der zu dieser gegebenen Rolleneinheit hinteren Rolleneinheit zugeordnet ist,
- wobei die Steuerung des Bewegungsvorgangs einen Drehung einer oder mehrerer Rollen dieser gegebenen Rolleneinheit umfasst, wenn
   ∘ das Signal des Sensors, welcher zu dieser gegebenen Rolleneinheit zugeordnet ist, den ersten Signalzustand aufweist,
   ∘ das Signal des Sensors, welcher zu dieser gegebenen Rolleneinheit vorderen Rolleneinheit zugeordnet ist, den zweiten Signalzustand aufweist und
   ∘ das Signal des Sensors, welcher zu dieser gegebenen Rolleneinheit hinteren Rolleneinheit zugeordnet ist, den ersten Signalzustand aufweist
- wobei die Steuerung des Bewegungsvorgangs der gegebenen Rolleneinheit (116) in Abhängigkeit von dem Signal des Sensors (110), welcher der zu dieser gegebenen Rolleneinheit (116) hinteren Rolleneinheit (116) zugeordnet ist, eine Steuerung des Bewegungsvorgangs der gegebenen Rolleneinheit (116) in Abhängigkeit von dem Steuersignal des Steuermoduls (200) der zu dieser gegebenen Rolleneinheit (116) hinteren Rolleneinheit (116) umfasst..

Im Folgenden werden bevorzugte Ausführungsformen der Erfindung anhand der folgenden Zeichnungen näher erläutert. Es zeigen:
- Figur 1: eine schematische Ansicht einer Rollenbahn,
- Figur 2: eine schematische Ansicht einer Verschaltung von Steuermodulen einer Rollenbahn,
- Figur 3: eine tabellarische Übersicht verschiedener Sensorzustände,
- Figur 4: eine schematische Übersicht eines Verfahrens zur Steuerung einer Rollenbahn,
- Figur 5: eine schematische Ansicht eines Segments einer Rollenbahn,
- Figur 6: eine schematische Übersicht von Verfahrensschritten zur Steuerung einer Rollenbahn.

Im Folgenden werden einander ähnliche Elemente mit den gleichen Bezugszeichen gekennzeichnet. Ferner sei im Folgenden ohne Beschränkung der Allgemeinheit davon ausgegangen, dass der erste Signalzustand positiv (z.B. +5V) und der zweite Signalzustand negativ (z.B. -5V) ist. Dies dient jedoch lediglich der Vereinfachung von Formulierungen und soll nicht als Beschränkung der Erfindung auf positive und negative Signalzustände verstanden werden.

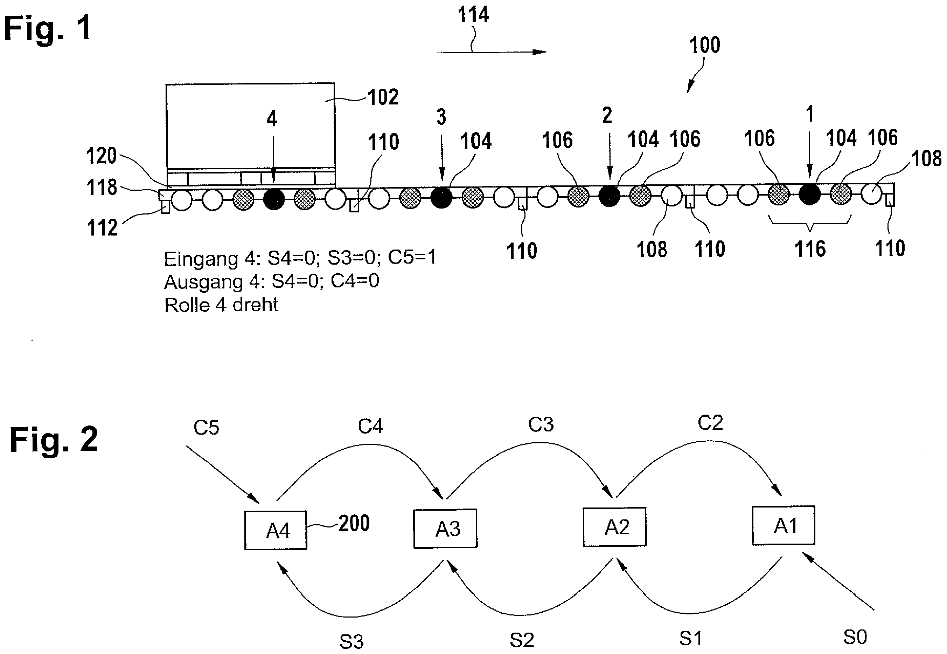

Die Figur 1 zeigt eine schematische Ansicht einer Rollenbahn 100 mit verschiedenen parallel nebeneinander angeordnete Fördersegmente zum Fördern von Fördergut 102 in eine Förderrichtung 114. Die Fördersegmente sind mit den Nummer 1 bis 4 von rechts nach links durchnummeriert. Jedes das Fördersegmente weist neben einer steuerbaren Antriebs- und/oder Bremsrolle 104 mechanisch mit der jeweiligen steuerbaren Rolle 104 verbundene Tragrollen 106 auf. Die Verbindung ist dabei dergestalt, sodass eine Rotationsbewegung der steuerbaren Rolle 104 automatisch zu einem identischen Rotationsverhalten der damit mechanisch gekoppelten verbundenen Tragrollen 106 führt. Ferner sind für jedes Fördersegment "nicht verbundene Tragrollen," 108 vorgesehen, welche lediglich der Abstützung des Förderguts 102 auf der Rollenbahn 100 dienen.

So weist das Fördersegment 1 neben einer einzelnen steuerbaren Rolle 104 z.B. zwei mit dieser steuerbaren Rolle verbundenen Tragrollen 106 und drei nicht verbundenen Tragrollen 108 auf. Die steuerbare Rolle 104 und die beiden mit der steuerbaren Rolle mechanisch gekoppelten Tragrollen 106 bilden dabei am Fördersegment 1 eine Rolleneinheit 116. Identische, weitere solcher Rolleneinheiten 116 sind für die Fördersegmente 2, 3 und 4 vorgesehen.

Jeder Rolleneinheit ist ferner ein Sensor 110 zur Abgabe eines Signals S zugeordnet, wobei das Signal positiv im Fall des Vorhandenseins und negativ im Falle des Nichtvorhandenseins des Förderguts 102 an einer Sensorposition relativ zu der jeweiligen Rolleneinheit ist, zu welcher der Sensor zugeordnet ist. Im Folgenden sei ohne Beschränkung der Allgemeinheit davon ausgegangen, dass es sich bei dem Fördergut 102 um eine Palette handelt. Die Palette 102 weist Palettenkufen in Form von Laufflächen 120 auf, wobei die Palette mit Querdurchlauf in Richtung 114 über die Rollenbahn 100 belegt werden soll. Die angetriebenen und nicht angetriebenen Rollen der Rollenbahn sind in einer entsprechenden länglichen Rahmenstruktur 118 der Rollenbahn 100 gelagert.

Beispielsweise handelt es sich bei dem Sensor um eine Lichtschranke oder um einen Drucksensor, sodass bei "Betätigung" dieses Sensors oder bei Unterbrechung dieses Sensors (Lichtschranke) das positive Signal abgegeben wird.

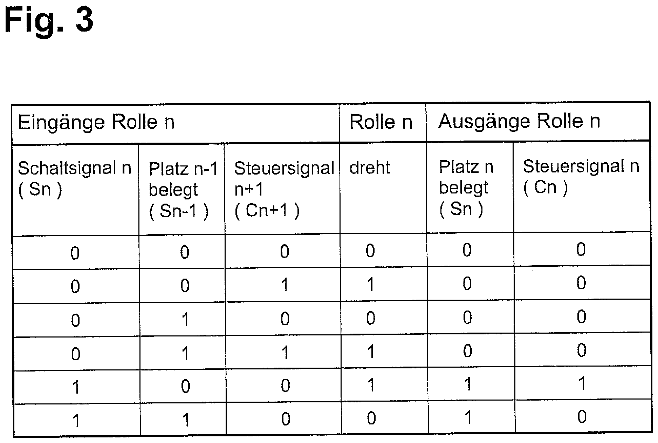

Jeder Rolleneinheit 116 eines Fördersegmentes ist ein Steuermodul 200 zugeordnet. Dieses ist in der Figur 2 gezeigt und mit der Bezeichnung A1, A2, A3 und A4 durchnummeriert. Die jeweiligen Steuermodule weisen jeweils drei Eingänge und zwei Ausgänge auf und sind in der Lage, die steuerbaren Rollen 104 bezüglich einer Antriebsfunktion oder einer Stoppfunktion zu kontrollieren. Hierzu ist in den jeweiligen Steuermodulen 200 eine Steuerlogik in Soft- oder Hardware implementiert, welche beispielsweise anhand der in Figur 3 gezeigten Logiktabelle arbeitet.

Um die Anzahl der Entscheidungsprozesse bezüglich der Logiktabelle der Figur 3 zu minimieren, ist vorgesehen, dass jede gegebene Rolleneinheit der in Transportrichtung 114 gesehenen nächsten vorderen Rolleneinheit, ein Steuersignal C zur Verfügung stellt. Dieses Steuersignal ist ausschließlich dann positiv, wenn gegenwärtig das Signal des Sensors, welches dieser gegebenenfalls Rolleneinheit zugeordnet ist, positiv ist und wenn das Signal des Sensors, welcher zu dieser gegebenen Rolleneinheit vorderen Rolleneinheit zugeordnet ist, negativ ist. In anderen Worten ist das Steuersignal dann positiv, wenn am gegenwärtigen Fördersegment das Sensorsignal positiv ist und das nachfolgende Fördersegment unbelegt ist.

Die Eingänge der Steuereinheit eines gegebenen Fördersegmentes umfassen das jeweilige Sensor- bzw. Schaltsignal n des jeweiligen Sensors 110 am jeweiligen Fördersegment, das entsprechende Sensor- oder Schaltsignal des Sensors, welcher in Transportrichtung gesehen der vorderen Rolleneinheit zugeordnet ist und dem besagten Steuersignal, welches von der Steuereinheit ausgesendet wird, welche entgegen der Transportrichtung gesehen hinter der gegebenen Rolleneinheit angeordnet ist. Konkret bedeutet dies beispielsweise bezüglich des Fördersegmentes in den Figuren 1 und 2, dass das Steuermodul A3 das Steuersignal C4 von der Steuereinheit des Fördersegmentes 4 empfängt, außerdem das Sensorsignal des Fördersegmentes 2 empfängt und außerdem über sein eigenes Sensorsignal am Fördersegment 3 verfügt. Die Ausgänge eines jeweiligen Steuermoduls 200 weisen das Sensorsignal am jeweiligen Fördersegment, zu dem das Steuermodul zugeordnet ist, und das jeweilige Steuersignal dieses Steuermoduls auf. Während das Steuersignal in Transportrichtung nach vorne weitergegeben wird, wird die Information über das Sensorsignal nach hinten an die entgegen der Transportrichtung hinter der gegebenen Rolleneinheit angeordnete hintere Rolleneinheit oder deren Steuermodul weitergegeben.

Auch wieder konkret in Bezug auf die Figuren 1 und 2 bedeutet dies bezüglich beispielsweise des Fördersegmentes 3, dass das Steuersignal C3 an das Steuermodul A2 des Fördersegmentes 2 übergeben wird und außerdem die Information über das Sensorsignal am Fördersegment 3 nach hinten zum Steuermodul A4 als Signal S3 übergeben wird.

Eine Besonderheit bilden die Rolleneinheiten an einer Entnahmeposition der Rollenbahn, zum Beispiel des Fördersegmentes 1 und an einer Zuführposition der Rollenbahn, zum Beispiel des Fördersegments 4. Bezüglich Fördersegment 1 muss gewährleistet sein, dass nach Erreichen der Entnahmeposition die Palette nicht weiter in Richtung 114 weiterbewegt wird. Bezüglich Fördersegment 4 muss gewährleistet sein, dass die Palette 102 nach Aufsetzen auf die Rollenbahn auch tatsächlich in Richtung 114 transportiert werden kann. Letzteres ist vor dem Hintergrund wichtig, dass ein Aufsetzen auf der Rollenbahn 100 üblicherweise nicht so exakt stattfinden kann, dass die Palette 102 exakt mit ihrer Vorderkante auf dem Sensor 110 zu sitzen kommt. Daher ist vorgesehen, dass ein zusätzlicher Sensor an der Zuführposition der Rollenbahn vorgesehen ist, welche in der Figur 1 mit Bezugszeichen 112 gekennzeichnet ist. Dieser zusätzliche Sensor 112 gibt ein positives Signal im Falle des Vorhandenseins und ein negatives Signal im Falle des Nichtvorhandenseins des Förderguts an der Sensorposition ab. Dieses Signal wird als Steuersignal C5 der Steuereinheit A4 zur Verfügung gestellt.

Auf Seiten der Entnahmeposition ist ferner eine Verschaltung der Steuereinheit A1 so vorgesehen, dass diese an ihrem Eingang grundsätzlich ein positives Sensorsignal bezüglich "Platz n-1 belegt" empfängt. Es wird also simuliert, dass an der Entnahmeposition grundsätzlich fiktiv vor der Entnahmeposition eine Palette befindlich ist. Dadurch wird verhindert, dass die Rolleneinheit 116 am Fördersegment 1 versucht, trotz der Logiktabelle der Figur 3 weiter eine entsprechende Palette 114 über die Entnahmeposition hinaus zu bewegen.

Im Folgenden sei von der Situation ausgegangen, wie sie in der Figur 1 gezeigt ist. In der Zusammenschau der Figuren 1, 2 und 3 gilt daher Folgendes: Der Sensor 112 erfasst das Vorhandensein der Palette 102, sodass der Sensor als Steuersignal C5 ein positives Signal (positiv sei im Folgenden mit 1 bezeichnet und negativ mit 0) liefert. C5 ist daher 1 (C5=1). Dieses Signal C5 wird der Steuereinheit 4 am Fördersegment 4 zur Verfügung gestellt. Die Steuereinheit 4 erhält außerdem vom Sensor 110, welcher dem Fördersegment 4 bzw. der Rolleneinheit am Fördersegment 4 zugeordnet ist, ein negatives Signal, da die Palette 102 noch nicht erfasst ist. Daher ist S4 = 0. Ferner wird vom Fördersegment 3 die Information geliefert, dass der dortige Sensor 110 noch keine Palette detektiert, sodass S3 = 0 ist. Entsprechend der Logiktabelle 3 gilt damit für die Kombination 0, 0, 1, dass sich die Rolle n = 4 dreht, um damit die Palette 102 in Richtung 114 zu befördern. Am Ausgang der Steuereinheit für die Rolleneinheit 4 am Fördersegment 4 wird ferner übermittelt, dass der Sensor A4 noch kein Signal detektiert (S4 = 0) und außerdem wird berechnet, dass C4 = 0 ist. Das Steuersignal C4 wird erst dann positiv, wenn der vordere Fördersegment frei ist und das gegenwärtige Fördersegment 4 belegt ist.

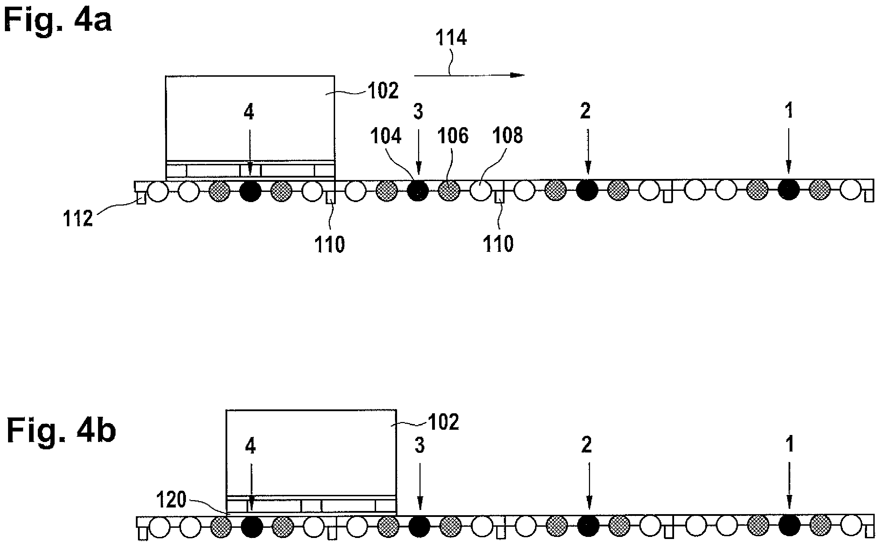

Die Figuren 4a) bis 4e) zeigen nun schrittweise, wie sich die Palette 102 von links nach rechts über die Rollenbahn 100 bewegt. In der Figur 4a) hat sich dabei die Palette 102 so weit nach rechts bewegt, dass sie nun den Sensor 110 betätigt. Beispielsweise wird eine dem Sensor 110 zugeordnete Lichtschranke unterbrochen oder bei dem Sensor 110 handelt es sich um einen Drucksensor, welchen die rechte Palettenkufe 120 der Palette 102 gegenwärtig berührt. Damit liefert der Sensor am Fördersegment 4 ein positives Signal (S4 = 1). Darüber hinausgehend ist Fördersegment 3 immer noch unbelegt (S3 = 0) und der Sensor 112 meldet, dass er keine Palette mehr detektiert (C5 = 0). Damit gilt entsprechend wiederum der Logiktabelle der Figur 3, dass sich die Rollen der Rolleneinheit des Fördersegmentes 4 drehen.

Auf Fördersegment 3 und der zugehörigen Steuereinheit gilt nun Folgendes: Eine Palette wird bezüglich Fördersegment 3 noch nicht detektiert (S3 = 0) und außerdem ist Fördersegment 2 ebenfalls unbelegt (S2 = 0). Allerdings erhält die Steuereinheit von Fördersegment 3 das Steuersignal C4 als positives Signal (C4 = 1). Entsprechend der Logiktabelle der Figur 3 bedeutet dies, dass sich ebenfalls Rolle 3 dreht. Am Ausgang der zugehörigen Steuereinheit liegen die Werte S3 = 0 und C3 = 0 an.

Der Sinn des Drehens von sowohl Rolle 4 als auch von Rolle 3 ist in der Figur 4b) ersichtlich. Sobald die vordere Kufe 120 auf eine der angetriebenen Tragrollen am Fördersegment 3 trifft, wird die Palette 102 auf Fördersegment 3 in Richtung 114 gezogen. Aufgrund der relativen Anordnung von Tragrollen, angetriebenen Tragrollen und steuerbaren Rollen wird selbst nach Verlassen der letzten Palettenkufe 120 von der Rolleneinheit des Fördersegmentes 4 gewährleistet sein, dass die Palette 102 vollständig in Richtung 114 auf dem Fördersegment 3 gezogen wird.

In der in Figur 4b) gezeigten Position ist es nun so, dass der Sensor für Fördersegment 4 durch keine der Palettenkufen 120 betätigt wird. Dies würde eigentlich dazu führen, dass am Eingang 4 folgende Signale anliegen: S4 = 0, S3 = 0, C5 = 0. Entsprechend der Schaltlogik der Figur 3 würde dies zu einem Abstoppen der Rotation der Rollen der Rolleneinheit am Fördersegment 4 führen. Die Palette 102 würde also nicht weiter in Richtung 114 bewegt werden. Um dies zu verhindern ist vorgesehen, dass sämtliche Schaltsignale der Sensoren 110 abfallverzögert bereitgestellt werden. Dies bedeutet, dass selbst nach Verlassen des Sensorbereichs durch eine der Palettenkufen 120 weiter ein positives Signal über einen vordefinierten konstanten Zeitraum aufrechterhalten wird. Dieser Zeitraum ist ausreichend, damit die nächste Palettenkufe derselben Palette auf den Sensor auflaufen kann um somit erneut ein positives Sensorsignal zu bewirken. Dies ermöglicht, dass auch im Querdurchlauf die Paletten ohne einen ungewollten Stillstand in Richtung 114 transportiert werden können.

Konsequenterweise liegen am Eingang 4 der Steuereinheit A4 folgende Signale an: S4 = 1, S3 = 0, C5 = 0. Am Ausgang liegt an: S4 = 1 und C4 = 1.

Bezüglich Steuereinheit 3 liegt am Eingang an: S3 = 0, S2 = 0, C4 = 1. Am Ausgang der Steuereinheit 3 wird ausgegeben: S3 = 0 und C3 = 0.

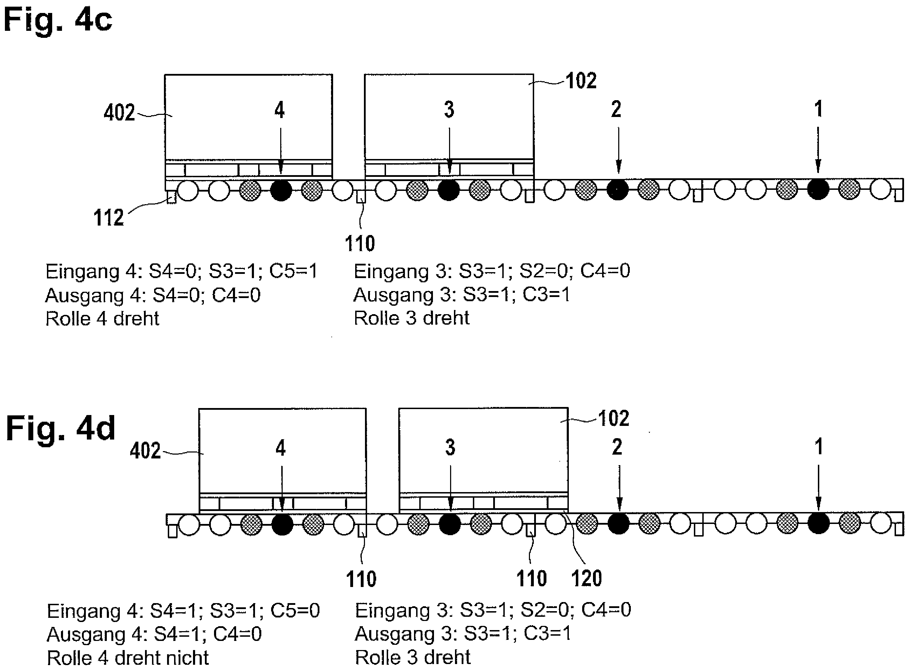

In der Figur 4c) wurde die Palette 102 so weit in Richtung 114 bewegt, dass sie nun den Sensor des Fördersegmentes 3 betätigt. Außerdem wurde eine weitere Palette 402 auf dem Fördersegment 4 aufgesetzt, sodass diese Palette nun den Sensor 112 betätigt.

Sensor 3 von Fördersegment 3 detektiert also das Vorhandensein der Palette 102 (S3 = 1), empfängt außerdem die Information, dass Fördersegment 2 unbelegt ist (S2 = 0) und erhält außerdem das Steuersignal C4 = 0 von Fördersegment 4. C4 ist bei Fördersegment 4 deshalb 0, da der Sensor 110 von Fördersegment 4 nicht betätigt ist.

Bezüglich Fördersegment 4 liegt an der Steuereinheit an deren Einheit an: S4 = 0, S3 = 1 und C5 = 1. Die Steuereinheit liefert außerdem S4 = 0 und C4 = 0. Die Rolleneinheit der Rolle 4 dreht also entsprechend der Logiktabelle der Figur 3.

Dies führt dazu, dass die Palette 402 ein wenig nach rechts transportiert wird und nun in der Figur 4d) Kontakt mit dem Sensor 110 am Fördersegment 4 hat. Außerdem wurde die Palette 102 weiter nach rechts gedreht. Auch der Sensor 110 am Fördersegment 3 liefert wie die übrigen Sensoren abfallverzögert ein Signal, sodass auch nach dem Verlassen der Position am Sensor am Fördersegment 3 durch die rechte Kufe 120 der Palette 102 nach wie vor ein positives Sensorsignal S3 = 1 ausgegeben wird. An Steuereinheit 4 liegen also folgende Signale an: S4 = 1, S3 = 1 und C5 = 0. Am Ausgang liegt an: S4 = 1 und C4 = 0. Dies führt dazu, dass die Rollen der Rolleneinheit 4 augenblicklich nicht drehen. Würden diese nämlich drehen, so würde dies zu einer Kollision von Palette 402 mit der vorangehenden Palette 102 führen.

Hingegen drehen die Rollen der Rolfeneinheit von Fördersegment 3, da an der zugehörigen Steuereinheit am Eingang 3 Folgendes anliegt: S3 = 1, S2 = 0 und C4 = 0. Am Ausgang der Steuereinheit 3 liegt an S3 = 1 und C3 = 1.

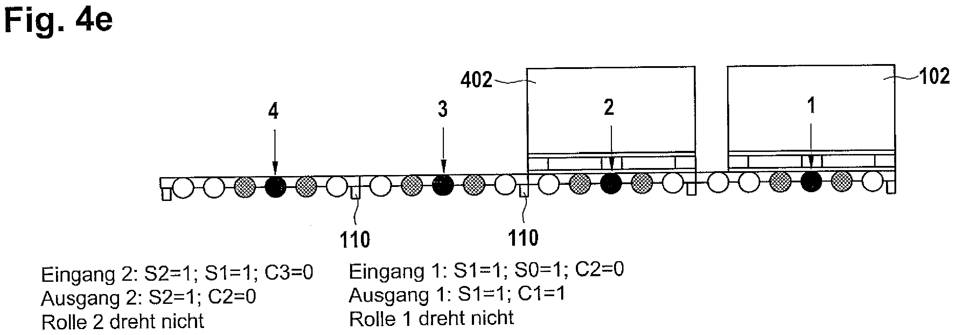

In der Figur 4e wird die Endstellung gezeigt, nachdem die Palette 102 die Entnahmeposition am Fördersegment 1 erhalten hat. Am Fördersegment 1 liegt als Eingangssignal S0 eines rechts vom Fördersegment 1 angeordneten fiktiven Fördersegmentes 0 ein positives Sensorsignal 1 an. Es wird also simuliert, dass rechts von Palette 102 noch eine weitere Palette steht, sodass auf alle Fälle bei Belegtsein des Sensors von Fördersegment 1 die zugehörigen Rollen nicht weiter die Palette 102 nach rechts bewegen. Palette 102 steht also und am Eingang der Steuereinheit 1 liegt an: S1 = 1, S0 = 1 und C2 = 0. Am Ausgang liegt an: S1 = 1 und C1 = 1.

Bezüglich Fördersegment 2 drehen die dortigen Rollen ebenfalls nicht weiter, da an der zugehörigen Steuereinheit anliegt: S2 = 1, S1 = 1 und C3 = 0. Am Ausgang liegt an: S2 = 1 und C2 = 0. Erst wenn die Palette 102 von der Entnahmeposition entnommen ist, kann die Palette 402 in der Transportrichtung nach rechts weiter befördert werden.

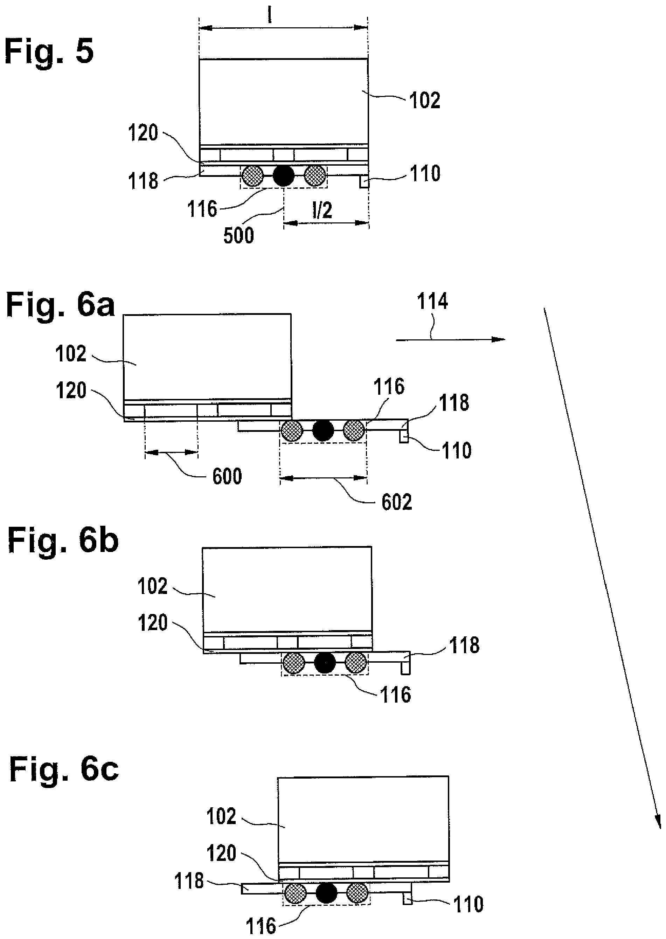

Die Figur 5 zeigt eine schematische Ansicht einer Palette 102 in Längsdurchlauf mit einer in der Transportrichtung gesehenen einzelnen, entsprechenden länglichen Palettenkufe 120. Senkrecht zur Transportrichtung gesehen verfügt die Palette 102 noch über weitere parallel zu der in Fig. 5 sichtbaren Kufe verlaufende Kufen, welche hier jedoch keine Rolle spielen sollen. Die Palette liegt mit ihrer besagten Palettenkufe 120 auf der Rolleneinheit 116 auf, welche in der Figur 5 nur schematisch dargestellt ist. Ferner ist in der Figur 5 der an einer Rahmeneinheit 118 der Rollenbahn befestigte Sensor 110 gezeigt. Der Sensor 110 ist am Ende der Rolleneinheit 116 angeordnet.

Die Rolleneinheit 116 weist nun einen räumlichen Bereich auf, in welchem eine Kraftübertragung aufgrund der Bewegung der Rollen der Rolleneinheit 116 auf die Palettenkufe 120 stattfinden kann. Dieser räumliche Bereich der Kraftübertragung weist eine Mitte 500 auf, welche in der Figur 5 schematisch dargestellt ist. Der Abstand zwischen diesem Mittelpunkt 500 und dem Sensor 110 (beziehungsweise der Sensorposition, an welchem das Vorhandensein oder Nichtvorhandensein der Palette 102 detektiert wird) entspricht nun der halben Erstreckungslänge der Palette 102, gesehen in der Transportrichtung der Rollenbahn. Ist also die Erstreckungslänge des Förderguts durch die Variable I gekennzeichnet, so ist der Abstand zwischen Sensor 110 und Mittelpunkt 500 durch I/2 gegeben.

Dies könnte den Vorteil haben, dass in der in der Figur 5 gezeigten Position bei Anlaufen der Rollen der Rolleneinheit die gesamte Gewichtskraft der Palette 102 auf dieser Rolleneinheit 116 ruht. Damit wird eine maximale Kraftübertragung zwischen den Rollen und der Palettenkufe 120 gewährleistet.

Während Figur 5 den Längsdurchlauf einer Palette 102 diskutierte, ist in den Figuren 6a bis 6c der Vorgang eines Querdurchlaufs einer Palette 102 mit entsprechenden Palettenkufen (Laufflächen) 120 diskutiert. Die Laufflächen weisen dabei einen inneren Abstand 600 voneinander auf. Der räumliche Bereich, in welchem die Rolleneinheit 116 eine Kraftübertragung auf die Palettenkufen 120 ausüben kann, ist durch das Bezugszeichen 602 gekennzeichnet. Um nun einen durchgängigen Transport der Palette 102 über das in Figur 6a gezeigten Fördersegment zu ermöglichen, ist vorgesehen, dass die Erstreckungslänge 602 dieses räumlichen Bereichs der Rolleneinheit, 116 größer ist als der Abstand 600 zweier einander benachbarter Kufen (Laufflächen) der Kufen 120 der Palette 102.

In der Figur 6a ist die rechte Kufe gerade auf die Rolleneinheit 116 aufgelaufen und wird daher in Richtung 114 von dieser Rolleneinheit gezogen.

In der Figur 6b ist die Palette 102 so weit nach rechts gewandert, dass nun auch die mittlere Palettenkufe 120 auf die Rolleneinheit 116 aufläuft, während die rechte Palettenkufe 120 sich ebenfalls noch auf der Rolleneinheit befindet. Kurze Zeit später (nicht gezeigt) wird aufgrund der Bewegung der Palette 102 nach rechts die rechte Palettenkufe die Rolleneinheit verlassen haben und eine Kraftübertragung für eine Förderbewegung wird nun ausschließlich auf die mittlere Palettenkufe ausgeübt werden.

In der Figur 6c kann dann wiederum die linke Palettenkufe 120 auf die Rolleneinheit 116 auflaufen. Es wird nun eine Kraftübertragung von der Rolleneinheit 116 auf die linke Palettenkufe 120 zur Weiterbewegung der Palette 102 nach rechts stattfinden.

### Bezugszeichenliste

- 100: Rollenbahn
- 102: Palette
- 104: steuerbare Rolle
- 106: gekoppelte Tragrolle
- 108: ungekoppelte Tragrolle
- 110: Sensor
- 112: Sensor
- 114: Transportrichtung
- 116: Rolleneinheit
- 118: Rahmen der Rollenbahn
- 120: Lauffläche
- 200: Steuereinheit
- 500: Mitte
- 600: Abstand
- 602: Länge

## Patentansprüche

1. Rollenbahn (100) mit parallel nebeneinander angeordneten Rolleneinheiten (116) zum Fördern von Fördergut, wobei jeder der Rolleneinheiten (116) ein Steuermodul (200) zugeordnet ist,
- wobei jeder der Rolleneinheiten (116) ein Sensor (110) zur Abgabe eines Signals zugeordnet ist, wobei das Signal einen ersten Signalzustand im Falle des Vorhandenseins und einen zweiten Signalzustand im Falle des Nicht-Vorhandenseins des Förderguts (102;402) an einer Sensorposition relativ zu der Rolleneinheit (116) aufweist, zu welcher der Sensor (110) zugeordnet ist, wobei eine gegebene Rolleneinheit (116) oder der Sensor (110) der gegebenen Rolleneinheit (116) dazu ausgebildet ist,
∘ das Signal dem dieser gegebenen Rolleneinheit (116) zugeordneten Steuermodul (200) bereitzustellen,
∘ das Signal dem Steuermodul (200) jener hinteren Rolleneinheit (116) bereitzustellen, welche entgegen der Transportrichtung (114) der Rollenbahn (100) gesehen jene Rolleneinheit (116) ist, welche unmittelbar vor der gegebenen Rolleneinheit (116) an der Rollenbahn (100) angeordnet ist,
∘ das Signal dem Steuermodul (200) jener vorderen Rolleneinheit (116) bereitzustellen, welche in Richtung der Transportrichtung (114) der Rollenbahn (100) gesehen jene Rolleneinheit (116) ist, welche unmittelbar vor der gegebenen Rolleneinheit (116) an der Rollenbahn (100) angeordnet ist,
- wobei das Steuermodul (200) einer Rolleneinheit (116) dazu ausgebildet ist, einen Bewegungsvorgang von Rollen dieser Rolleneinheit (116) zu steuern, wobei bezüglich einer gegebenen Rolleneinheit (116) der Bewegungsvorgang steuerbar ist, in Abhängigkeit von
∘ dem Signal des Sensors (110), welcher zu dieser gegebenen Rolleneinheit (116) zugeordnet ist,
∘ dem Signal des Sensors (110), welcher der zu dieser gegebenen Rolleneinheit (116) vorderen Rolleneinheit (116) zugeordnet ist,
∘ dem Signal des Sensors (110), welcher der zu dieser gegebenen Rolleneinheit (116) hinteren Rolleneinheit (116) zugeordnet ist,
- wobei die Steuerung des Bewegungsvorgangs eine Drehung einer oder mehrerer Rollen dieser gegebenen Rolleneinheit (116) umfasst, wenn
∘ das Signal des Sensors (110), welcher zu dieser gegebenen Rolleneinheit (116) zugeordnet ist, den ersten Signalzustand aufweist,
∘ das Signal des Sensors (110), welcher zu dieser gegebenen Rolleneinheit (116) vorderen Rolleneinheit (116) zugeordnet ist, den zweiten Signalzustand aufweist und
∘ das Signal des Sensors (110), welcher zu dieser gegebenen Rolleneinheit (116) hinteren Rolleneinheit (116) zugeordnet ist, den ersten Signalzustand oder den zweiten Signalzustand aufweist, **dadurch gekennzeichnet, dass** das Steuermodul (200) einer gegebenen Rolleneinheit (116) zur Abgabe eines Steuersignals an ein Steuermodul (200) der zu dieser gegebenen Rolleneinheit (116) vorderen Rolleneinheit (116) ausgebildet ist, wobei das Steuersignal ausschließlich dann den ersten Signalzustand aufweist, wenn gegenwärtig das Signal des Sensors (110), welcher zu dieser gegebenen Rolleneinheit (116) zugeordnet ist, den ersten Signalzustand aufweist und wenn das Signal des Sensors (110), welcher zu dieser gegebenen Rolleneinheit (116) vorderen Rolleneinheit (116) zugeordnet ist, den zweiten Signalzustand aufweist,
- wobei die Steuerung des Bewegungsvorgangs der gegebenen Rolleneinheit (116) in Abhängigkeit von dem Signal des Sensors (110), welcher der zu dieser gegebenen Rolleneinheit (116) hinteren Rolleneinheit (116) zugeordnet ist, eine Steuerung des Bewegungsvorgangs der gegebenen Rolleneinheit (116) in Abhängigkeit von dem Steuersignal des Steuermoduls (200) der zu dieser gegebenen Rolleneinheit (116) hinteren Rolleneinheit (116) umfasst.

2. Rollenbahn (100) nach Anspruch 1,
- wobei die Steuerung des Bewegungsvorgangs eine Drehung einer oder mehrerer Rollen dieser gegebenen Rolleneinheit (116) umfasst, wenn
∘ das Signal des Sensors (110), welcher zu dieser gegebenen Rolleneinheit (116) zugeordnet ist, den zweiten Signalzustand aufweist,
∘ das Signal des Sensors (110), welcher zu dieser gegebenen Rolleneinheit (116) vorderen Rolleneinheit (116) zugeordnet ist, den ersten Signalzustand aufweist und
∘ das Signal des Sensors (110), welcher zu dieser gegebenen Rolleneinheit (116) hinteren Rolleneinheit (116) zugeordnet ist, den ersten Signalzustand aufweist,
und/oder
wobei die Steuerung des Bewegungsvorgangs eine Drehung einer oder mehrerer Rollen dieser gegebenen Rolleneinheit (116) umfasst, wenn
∘ das Signal des Sensors (110), welcher zu dieser gegebenen Rolleneinheit (116) zugeordnet ist, den zweiten Signalzustand aufweist,
∘ das Signal des Sensors (110), welcher zu dieser gegebenen Rolleneinheit (116) vorderen Rolleneinheit (116) zugeordnet ist, den zweiten Signalzustand aufweist und
∘ das Signal des Sensors (110), welcher zu dieser gegebenen Rolleneinheit (116) hinteren Rolleneinheit (116) zugeordnet ist, den ersten Signalzustand aufweist.

3. Rollenbahn (100) nach einem der vorigen Ansprüche,
- wobei die Steuerung des Bewegungsvorgangs einen Stoppvorgang einer Drehung einer oder mehrerer Rollen dieser gegebenen Rolleneinheit (116) umfasst, wenn
∘ das Signal des Sensors (110), welcher zu dieser gegebenen Rolleneinheit (116) zugeordnet ist, den zweiten Signalzustand aufweist,
∘ das Signal des Sensors (110), welcher zu dieser gegebenen Rolleneinheit (116) vorderen Rolleneinheit (116) zugeordnet ist, den zweiten Signalzustand aufweist und
∘ das Signal des Sensors (110), welcher zu dieser gegebenen Rolleneinheit (116) hinteren Rolleneinheit (116) zugeordnet ist, den zweiten Signalzustand aufweist
und/oder
- wobei die Steuerung des Bewegungsvorgangs einen Stoppvorgang einer Drehung einer oder mehrerer Rollen dieser gegebenen Rolleneinheit (116) umfasst, wenn
∘ das Signal des Sensors (110), welcher zu dieser gegebenen Rolleneinheit (116) zugeordnet ist, den zweiten Signalzustand aufweist,
∘ das Signal des Sensors (110), welcher zu dieser gegebenen Rolleneinheit (116) vorderen Rolleneinheit (116) zugeordnet ist, den ersten Signalzustand aufweist und
∘ das Signal des Sensors (110), welcher zu dieser gegebenen Rolleneinheit (116) hinteren Rolleneinheit (116) zugeordnet ist, den zweiten Signalzustand aufweist.
und/oder
- wobei die Steuerung des Bewegungsvorgangs einen Stoppvorgang einer Drehung einer oder mehrerer Rollen dieser gegebenen Rolleneinheit (116) umfasst, wenn
∘ das Signal des Sensors (110), welcher zu dieser gegebenen Rolleneinheit (116) zugeordnet ist, den ersten Signalzustand aufweist,
∘ das Signal des Sensors (110), welcher zu dieser gegebenen Rolleneinheit (116) vorderen Rolleneinheit (116) zugeordnet ist, den ersten Signalzustand aufweist und
∘ das Signal des Sensors (110), welcher zu dieser gegebenen Rolleneinheit (116) hinteren Rolleneinheit (116) zugeordnet ist, den ersten Signalzustand oder den zweiten Signalzustand aufweist.

4. Rollenbahn (100) nach einem der vorhergehenden Ansprüche, wobei das Steuermodul (200) einer gegebenen Rolleneinheit (116) drei Signaleingänge und zwei Signalausgänge aufweist, wobei die drei Signaleingänge ausgebildet sind zum
- Empfang des Signals des Sensors (110), welcher zu dieser gegebenen Rolleneinheit (116) zugeordnet ist,
- Empfang des Signals des Sensors (110), welcher zu dieser gegebenen Rolleneinheit (116) vorderen Rolleneinheit (116) zugeordnet ist,
- Empfang des Steuersignals des Steuermoduls (200), welches zu dieser gegebenen Rolleneinheit (116) hinteren Rolleneinheit (116) zugeordnet ist,
wobei die Signalausgänge ausgebildet sind zum
- Bereitstellen des Signals des Sensors (110), welcher zu dieser gegebenen Rolleneinheit (116) zugeordnet ist, an die Steuereinheit, an die Steuereinheit der zu dieser gegebenen Rolleneinheit (116) hinteren Rolleneinheit,
- Bereitstellen des Steuersignals des Steuermoduls (200), welches zu dieser gegebenen Rolleneinheit (116) zugeordnet ist, an die Steuereinheit, welches zu dieser gegebenen Rolleneinheit (116) vorderen Rolleneinheit (116) zugeordnet ist.

5. Rollenbahn (100) nach einem der vorigen Ansprüche, wobei der Sensor (110) einer gegebenen Rolleneinheit (116) in der Transportrichtung (114) gesehen vor der gegebenen Rolleneinheit (116) angeordnet ist.

6. Rollenbahn (100) nach einem der vorigen Ansprüche, wobei das Signal des einer Rolleneinheit (116) zugeordneten Sensors (110) abfallverzögert bereitstellbar ist, wenn das Signal den ersten Signalzustand aufweist.

7. Rollenbahn (100) nach Anspruch 6, wobei
- das Fördergut (102;402) in der Transportrichtung (114) gesehen mehrere hintereinander angeordnete Laufflächen (120) aufweist, wobei das Fördergut (102;402) über die Laufflächen (120) auf der Rollenbahn (100) abstützbar und förderbar ist,
- der Bewegungsvorgang und der Stoppvorgang eine Kraftübertragung von den Rollen der Rolleneinheit (116) in einem räumlichen Bereich der Rolleneinheit (116) auf das Fördergut (102;402) über die Laufflächen (120) umfasst,
- die Abfallverzögerung so ausgebildet ist, dass nachdem eine einzelne der Laufflächen (120) die Sensorposition der gegebenen Rolleneinheit (116) verlassen hat, so lange der erste Signalzustand des Sensors (110) der gegebenen Rolleneinheit (116) aufrechterhalten wird, bis die hinter dieser einzelnen Lauffläche vorhandene Lauffläche dieses Förderguts (102;402) in den vordefinierten Bereich der gegebenen Rolleneinheit (116) eintritt, welcher durch den Sensor (110) der gegebenen Rolleneinheit (116) erfassbar ist.

8. Rollenbahn (100) nach Anspruch 7, ferner mit einem Zeitgeber zur Bereitstellung der Abfallverzögerung in Form einer konstanten Zeitdauer.

9. Rollenbahn (100) nach einem der vorigen Ansprüche, wobei jede der Rolleneinheiten (116) eine durch das Steuermodul (200) der jeweiligen Rolleneinheit (116) steuerbare Rolle (104) umfasst, wobei die steuerbare Rolle (104) eine Antriebsrolle und/oder eine Bremsrolle umfasst.

10. Rollenbahn (100) nach Anspruch 9, wobei jede der Rolleneinheiten (116) ferner mehrere erste Tragrollen (106) umfasst, wobei bezüglich einer gegebenen Rolleneinheit (116) deren erste Tragrollen (106) mechanisch mit der steuerbaren Rolle gekoppelt sind, wobei aufgrund der mechanischen Kopplung das Drehverhalten der gekoppelten ersten Tragrollen (106) identisch ist mit dem Drehverhalten der steuerbaren Rolle, wobei der Bewegungsvorgang und der Stoppvorgang eine Kraftübertragung von den Rollen der Rolleneinheit (116) in einem räumlichen Bereich der Rolleneinheit, (116) auf das Fördergut (102;402) über die Laufflächen (120) umfasst, wobei die steuerbare Rolle (104) und die mehreren ersten Tragrollen für die Kraftübertragung ausgebildet sind.

11. Rollenbahn (100) nach Anspruch 10, wobei
- der Bewegungsvorgang und der Stoppvorgang eine Kraftübertragung von den Rollen der Rolleneinheit (116) in einem räumlichen Bereich der Rolleneinheit (116) auf das Fördergut (102;402) umfasst,
- das Fördergut (102;402) in der Transportrichtung (114) gesehen mehrere hintereinander angeordnete Laufflächen (120) aufweist, wobei das Fördergut (102;402) über die Laufflächen (120) auf der Rollenbahn (100) abstützbar und förderbar ist,
- wobei in der Transportrichtung (114) gesehen die Erstreckungslänge des räumlichen Bereichs größer ist als der Abstand zwischen zwei einander benachbarten Laufflächen (120) der mehreren Laufflächen (120).

12. Rollenbahn (100) nach einem der vorigen Ansprüche, wobei durch die Rollenbahn (100) eine Lagerfläche eines Lagerregals für das Fördergut (102;402) gebildet wird.

13. Rollenbahn (100) nach einem der vorigen Ansprüche, wobei für eine gegebene Rolleneinheit (116) der Bewegungsvorgang und der Stoppvorgang eine Kraftübertragung von den Rollen der Rolleneinheit (116) in einem räumlichen Bereich der Rolleneinheit (116) über eine Lauffläche (120) auf das Fördergut (102;402) umfasst, wobei in Richtung der Transportrichtung (114) der Rollenbahn (100) gesehen der Abstand des Mittelpunkts des räumlichen Bereichs der Rolleneinheit (116) von der Sensorposition des Sensors (110) dieser Rolleneinheit (116) der halben Erstreckungslänge des Förderguts (102;402), gesehen in der Transportrichtung (114) der Rollenbahn (100), entspricht.

14. Lagerregal mit einer Lagerfläche für Fördergut, wobei die Lagerfläche eine Rollenbahn (100) gemäß einem der vorigen Ansprüche umfasst.

15. Verfahren zur Steuerung einer Rollenbahn (100) mit parallel nebeneinander angeordneten Rolleneinheiten (116) zum Fördern von Fördergut, wobei jeder der Rolleneinheiten (116) ein Steuermodul (200) zugeordnet ist
- wobei jeder der Rolleneinheiten (116) ein Sensor (110) zur Abgabe eines Signals zugeordnet ist, wobei das Signal einen ersten Signalzustand im Falle des Vorhandenseins und einen zweiten Signalzustand im Falle des Nicht-Vorhandenseins des Förderguts (102;402) an einer Sensorposition relativ zu der Rolleneinheit (116) ist, zu welcher der Sensor (110) zugeordnet ist, wobei das Verfahren bezüglich des Sensors (110) einer gegebenen Rolleneinheit (116) umfasst,
∘ Bereitstellen des Signals dem dieser gegebenen Rolleneinheit (116) zugeordneten Steuermodul (200),
∘Bereitstellen des Signals dem Steuermodul (200) jener hinteren Rolleneinheit, welche entgegen der Transportrichtung (114) der Rollenbahn (100) gesehen jene Rolleneinheit (116) ist, welche unmittelbar vor der gegebenen Rolleneinheit (116) an der Rollenbahn (100) angeordnet ist,
- wobei das Verfahren eine Steuerung eines Bewegungsvorgangs von Rollen einer Rolleneinheit (116) durch ein Steuermodul (200) umfasst, wobei bezüglich einer gegebenen Rolleneinheit (116) der Bewegungsvorgang gesteuert wird in Abhängigkeit von
∘ dem Signal des Sensors (110), welcher zu dieser gegebenen Rolleneinheit (116) zugeordnet ist,
∘ dem Signal des Sensors (110), welcher der zu dieser gegebenen Rolleneinheit (116) vorderen Rolleneinheit (116) zugeordnet ist,
∘ dem Signal des Sensors (110), welcher der zu dieser gegebenen Rolleneinheit (116) hinteren Rolleneinheit (116) zugeordnet ist,
- wobei die Steuerung des Bewegungsvorgangs einen Drehung einer oder mehrerer Rollen dieser gegebenen Rolleneinheit (116) umfasst, wenn
∘ das Signal des Sensors (110), welcher zu dieser gegebenen Rolleneinheit (116) zugeordnet ist, den ersten Signalzustand aufweist,
∘ das Signal des Sensors (110), welcher zu dieser gegebenen Rolleneinheit (116) vorderen Rolleneinheit (116) zugeordnet ist, den zweiten Signalzustand aufweist und
∘ das Signal des Sensors (110), welcher zu dieser gegebenen Rolleneinheit (116) hinteren Rolleneinheit (116) zugeordnet ist, den ersten Signalzustand oder den zweiten Signalzustand aufweist, **gekennzeichnet durch**
∘ Bereitstellen eines Steuersignals an ein Steuermodul (200) der zu der gegebenen Rolleneinheit (116) vorderen Rolleneinheit (116), wobei das Steuersignal ausschließlich dann den ersten Signalzustand aufweist, wenn gegenwärtig das Signal des Sensors (110), welcher zu dieser gegebenen Rolleneinheit (116) zugeordnet ist, den ersten Signalzustand aufweist und wenn das Signal des Sensors (110), welcher zu dieser gegebenen Rolleneinheit (116) vorderen Rolleneinheit (116) zugeordnet ist, den zweiten Signalzustand aufweist,
- wobei die Steuerung des Bewegungsvorgangs der gegebenen Rolleneinheit (116) in Abhängigkeit von dem Signal des Sensors (110), welcher der zu dieser gegebenen Rolleneinheit (116) hinteren Rolleneinheit (116) zugeordnet ist, eine Steuerung des Bewegungsvorgangs der gegebenen Rolleneinheit (116) in Abhängigkeit von dem Steuersignal des Steuermoduls (200) der zu dieser gegebenen Rolleneinheit (116) hinteren Rolleneinheit (116) umfasst.

## Claims

1. A roller conveyor (100) having roller units (116) arranged adjacently in parallel for conveying material to be conveyed, wherein each of the roller units (116) is assigned a control module (200),
- wherein each of the roller units (116) is assigned a sensor (110) for emitting a signal, wherein the signal has a first signal state in the case of the presence, and a second signal state in the case of the absence of material to be conveyed (102; 402) at a sensor position relative to the roller unit (116) to which the sensor (110) is assigned, wherein a given roller unit (116) or the sensor (110) of the given roller unit (116) is designed
∘ to provide the signal to the control module (200) assigned to this given roller unit (116),
∘ to provide the signal to the control module (200) of the rear roller unit (116) that, as considered against the direction of transport (114) of the roller conveyor (100), is the roller unit (116) arranged directly in front of the given roller unit (116) on the roller conveyor (100),
∘ to provide the signal to the control module (200) of the front roller unit (116) that, as considered in the direction of transport (114) of the roller conveyor (100), is the roller unit (116) arranged directly in front of the given roller unit (116) on the roller conveyor (100),
- wherein the control module (200) of a roller unit (116) is designed to control a movement process of rollers of this roller unit (116), wherein, with regard to a given roller unit (116), the movement process can be controlled depending on
∘ the signal of the sensor (110) assigned to this given roller unit (116),
∘ the signal of the sensor (110) assigned to the roller unit (116) in front of this given roller unit (116),
∘ the signal of the sensor (110) assigned to the roller unit (116) behind this given roller unit (116),
- wherein the control of the movement process comprises a rotation of one or more rollers of this given roller unit (116) when
∘ the signal of the sensor (110) assigned to this given roller unit (116) has the first signal state,
∘ the signal of the sensor (110) assigned to the roller unit (116) in front of this given roller unit (116) has the second signal state, and
∘ the signal of the sensor (110) assigned to the roller unit (116) behind this given roller unit (116) has the first signal state or the second signal state,
**characterised in that** the control module (200) of a given roller unit (116) is designed to emit a control signal to a control module (200) of the roller unit (116) in front of this given roller unit (116), wherein the control signal then exclusively has the first signal state when the signal of the sensor (110) assigned to this given roller unit (116) currently has the first signal state and when the signal of the sensor (110) assigned to the roller unit (116) in front of this given roller unit (116) has the second signal state,
- wherein the control of the movement process of the given roller unit (116) depending on the signal of the sensor (110) assigned to the roller unit (116) behind this given roller unit (116) comprises a control of the movement process of the given roller unit (116) depending on the control signal of the control module (200) of the roller unit (116) behind this given roller unit (116).

2. The roller conveyor (100) according to claim 1,
- wherein the control of the movement process comprises a rotation of one or more rollers of this given roller unit (116) when
∘ the signal of the sensor (110) assigned to this given roller unit (116) has the second signal state,
∘ the signal of the sensor (110) assigned to the roller unit (116) in front of this given roller unit (116) has the first signal state, and
∘ the signal of the sensor (110) assigned to the roller unit (116) behind this given roller unit (116) has the first signal state,
and/or
wherein the control of the movement process comprises a rotation of one or more rollers of this given roller unit (116) when
∘ the signal of the sensor (110) assigned to this given roller unit (116) has the second signal state,
∘ the signal of the sensor (110) assigned to the roller unit (116) in front of this given roller unit (116) has the second signal state, and
∘ the signal of the sensor (110) assigned to the roller unit (116) behind this given roller unit (116) has the first signal state.

3. The roller conveyor (100) according to either one of the preceding claims,
- wherein the control of the movement process comprises a stopping process of a rotation of one or more rollers of this given roller unit (116) when
∘ the signal of the sensor (110) assigned to this given roller unit (116) has the second signal state,
∘ the signal of the sensor (110) assigned to the roller unit (116) in front of this given roller unit (116) has the second signal state, and
∘ the signal of the sensor (110) assigned to the roller unit (116) behind this given roller unit (116) has the second signal state,
and/or
- wherein the control of the movement process comprises a stopping process of a rotation of one or more rollers of this given roller unit (116) when
∘ the signal of the sensor (110) assigned to this given roller unit (116) has the second signal state,
∘ the signal of the sensor (110) assigned to the roller unit (116) in front of this given roller unit (116) has the first signal state, and
∘ the signal of the sensor (110) assigned to the roller unit (116) behind this given roller unit (116) has the second signal state,
and/or,
- wherein the control of the movement process comprises a stopping process of a rotation of one or more rollers of this given roller unit (116) when
∘ the signal of the sensor (110) assigned to this given roller unit (116) has the first signal state,
∘ the signal of the sensor (110) assigned to the roller unit (116) in front of this given roller unit (116) has the first signal state, and
∘ the signal of the sensor (110) assigned to the roller unit (116) behind this given roller unit (116) has the first signal state or the second signal state.

4. The roller conveyor (100) according to any one of the preceding claims, wherein the control module (200) of a given roller unit (116) has three signal inputs and two signal outputs, wherein the three signal inputs are designed to
- receive the signal of the sensor (110) assigned to this given roller unit (116),
- receive the signal of the sensor (110) assigned to the roller unit (116) in front of this given roller unit (116),
- receive the control signal of the control module (200) assigned to the roller unit (116) behind this given roller unit (116),
wherein the signal outputs are designed to
- provide the signal of the sensor (110) assigned to this given roller unit (116) at the control unit of the roller unit behind this given roller unit (116),
- provide the control signal of the control module (200) assigned to this given roller unit (116) at the control unit assigned to the roller unit (116) in front of this given roller unit (116).

5. The roller conveyor (100) according to any one of the preceding claims, wherein the sensor (110) of a given roller unit (116) is arranged in front of the given roller unit (116) as considered in the direction of transport (114).

6. The roller conveyor (100) according to any one of the preceding claims, wherein the signal of the sensor (110) assigned to a roller unit (116) can be provided with a dropout delay when the signal has the first signal state.

7. The roller conveyor (100) according to claim 6, wherein
- the material to be conveyed (102; 402), as considered in the direction of transport (114), has a plurality of bearing surfaces (120) arranged in succession, wherein the material to be conveyed (102; 402) can be supported and can be conveyed on the roller conveyor (100) via the bearing surfaces (120),
- the movement process and the stopping process comprises a transfer of force via the bearing surfaces (120) from the rollers of the roller unit (116), in a spatial region of the roller unit (116), to the material to be conveyed (102; 402),
- the dropout delay is such that, once an individual one of the bearing surfaces (120) has left the sensor position of the given roller unit (116), the first signal state of the sensor (110) of the given roller unit (116) is maintained until the bearing surface of this material to be conveyed (102; 402) provided after this individual bearing surface enters the predefined region of the given roller unit (116), which can be sensed by the sensor (110) of the given roller unit (116).

8. The roller conveyor (100) according to claim 7, also comprising a timer for providing the dropout delay in the form of a constant time period.

9. The roller conveyor (100) according to any one of the preceding claims, wherein each of the roller units (116) comprises a roller (104) controllable by the control module (200) of the corresponding roller unit (116), wherein the controllable roller (104) comprises a drive roller and/or a brake roller.

10. The roller conveyor (100) according to claim 9, wherein each of the roller units (116) also comprises a plurality of first supporting rollers (106), wherein, with regard to a given roller unit (116), the first supporting rollers (106) thereof are mechanically coupled to the controllable roller, wherein, on account of the mechanical coupling, the rotary behaviour of the coupled first supporting rollers (106) is identical to the rotary behaviour of the controllable roller, wherein the movement process and the stopping process comprises a transfer of force via the bearing surfaces (120) from the rollers of the roller unit (116), in a spatial region of the roller unit (116), to the material to be conveyed (102; 402), wherein the controllable roller (104) and the plurality of first supporting rollers are designed for the transfer of force.

11. The roller conveyor (100) according to claim 10, wherein
- the movement process and the stopping process comprises a transfer of force from the rollers of the roller unit (116), in a spatial region of the roller unit (116), to the material to be conveyed (102; 402),
- the material to be conveyed (102; 402), as considered in the direction of transport (114), has a plurality of bearing surfaces (120) arranged in succession, wherein the material to be conveyed (102; 402) can be supported and can be conveyed on the roller conveyor (100) via the bearing surfaces (120),
- wherein, as considered in the direction of transport (114), the length of the extent of the spatial region is greater than the distance between two mutually adjacent bearing surfaces (120) of the plurality of bearing surfaces (120).

12. The roller conveyor (100) according to any one of the preceding claims, wherein a bearing surface of a storage rack for the material to be conveyed (102; 402) is formed by the roller conveyor (100).

13. The roller conveyor (100) according to any one of the preceding claims, wherein, for a given roller unit (116), the movement process and the stopping process comprises a transfer of force via a bearing surface (120) from the rollers of the roller unit (116), in a spatial region of the roller unit (116), to the material to be conveyed (102; 402), wherein, as considered in the direction of transport (114) of the roller conveyor (100), the distance of the centre of the spatial region of the roller unit (116) from the sensor position of the sensor (110) of this roller unit (116) corresponds to half the length of the extent of the material to be conveyed (102; 402), as considered in the direction of transport (114) of the roller conveyor (100).

14. A storage rack having a bearing surface for material to be conveyed, wherein the bearing surface comprises a roller conveyor (100) according to any one of the preceding claims.

15. A method for controlling a roller conveyor (100) having roller units (116) arranged adjacently in parallel for conveying material to be conveyed, wherein each of the roller units (116) is assigned a control module (200),
- wherein each of the roller units (116) is assigned a sensor (110) for emitting a signal, wherein the signal has a first signal state in the case of the presence, and a second signal state in the case of the absence of material to be conveyed (102; 402) at a sensor position relative to the roller unit (116) to which the sensor (110) is assigned, wherein the method, with regard to the sensor (110) of a given roller unit (116), comprises the following steps
∘ providing the signal to the control module (200) assigned to this given roller unit (116),
∘ providing the signal to the control module (200) of the rear roller unit that, as considered against the direction of transport (114) of the roller conveyor (100), is the roller unit (116) arranged directly in front of the given roller unit (116) on the roller conveyor (100),
- wherein the method comprises a control of a movement process of rollers of a roller unit (116) by a control module (200), wherein, with regard to a given roller unit (116), the movement process is controlled depending on
∘ the signal of the sensor (110) assigned to this given roller unit (116),
∘ the signal of the sensor (110) assigned to the roller unit (116) in front of this given roller unit (116),
∘ the signal of the sensor (110) assigned to the roller unit (116) behind this given roller unit (116),
- wherein the control of the movement process comprises a rotation of one or more rollers of this given roller unit (116) when
∘ the signal of the sensor (110) assigned to this given roller unit (116) has the first signal state,
∘ the signal of the sensor (110) assigned to the roller unit (116) in front of this given roller unit (116) has the second signal state, and
∘ the signal of the sensor (110) assigned to the roller unit (116) behind this given roller unit (116) has the first signal state or the second signal state, **characterised by**
∘ providing a control signal at a control module (200) of the roller unit (116) in front of the given roller unit (116), wherein the control signal then exclusively has the first signal state when the signal of the sensor (110) assigned to this given roller unit (116) currently has the first signal state and when the signal of the sensor (110) assigned to the roller unit (116) in front of this given roller unit (116) has the second signal state,
- wherein the control of the movement process of the given roller unit (116) depending on the signal of the sensor (110) assigned to the roller unit (116) behind this given roller unit (116) comprises a control of the movement process of the given roller unit (116) depending on the control signal of the control module (200) of the roller unit (116) behind this given roller unit (116).

## Revendications

1. Convoyeur à rouleaux (100) avec des unités de rouleaux (116) disposées parallèlement les unes aux autres pour le transport d'une matière à transporter, où un module de commande (200) est associé à chacune des unités de rouleaux (116),
- où un capteur (110) est associé à chacune des unités de rouleaux (116) pour la délivrance d'un signal, où le signal présente un premier état de signal dans le cas de la présence et un deuxième état de signal dans le cas de l'absence de la matière à transporter (102 ; 402) au niveau d'une position de capteur par rapport à l'unité de rouleaux (116) à laquelle est associé le capteur (110), où une unité de rouleaux (116) donnée ou le capteur (110) de l'unité de rouleaux (116) donnée est conçu(e) pour
∘ mettre à disposition le signal au module de commande (200) associé à cette unité de rouleaux (116) donnée,
∘ mettre à disposition le signal au module de commande (200) d'une unité de rouleaux (116) arrière, laquelle est l'unité de rouleaux (116), vu dans le sens inverse à la direction de transport (114) du convoyeur à rouleaux (100), laquelle est disposée immédiatement avant l'unité de rouleaux (116) donnée sur le convoyeur à rouleaux (100),
∘ mettre à disposition le signal au module de commande (200) de l'unité de rouleaux (116) placée en avant, laquelle, vu dans le sens de la direction de transport (114) du convoyeur à rouleaux (100) est l'unité de rouleaux (116) laquelle est disposée immédiatement avant l'unité de rouleaux (116) donnée sur le convoyeur à rouleaux (100),
- où le module de commande (200) d'une unité de rouleaux (116) est conçu pour commander un processus de mouvement de rouleaux de cette unité de rouleaux (116), où, concernant une unité de rouleaux (116) donnée, le processus de mouvement peut être commandé en fonction
∘ du signal du capteur (110), lequel est associé à cette unité de rouleaux (116) donnée,
∘ du signal du capteur (110), lequel est associé à l'unité de rouleaux (116) placée avant cette unité de rouleaux (116) donnée,
∘ du signal de capteur (110), lequel est associé à l'unité de rouleaux (116) située après cette unité de rouleaux (116) donnée,
- où la commande du processus de mouvement comprend une rotation d'un ou de plusieurs rouleaux de cette unité de rouleaux (116) donnée lorsque
∘ le signal du capteur (110), lequel est associé à cette unité de rouleaux (116) donnée, présente le premier état de signal,
∘ le signal du capteur (110), lequel est associé à l'unité de rouleaux (116) placée avant cette unité de rouleaux (116) donnée, présente le deuxième état de signal, et
∘ le signal du capteur (110), lequel est associé à l'unité de rouleaux (116) située après cette unité de rouleaux (116) donnée, présente le premier état de signal ou le deuxième état de signal, **caractérisé en ce que** le module de commande (200) d'une unité de rouleaux (116) donnée est conçu pour la délivrance d'un signal de commande vis-à-vis d'un module de commande (200) de l'unité de rouleaux (116) placée avant cette unité de rouleaux (116) donnée, où le signal de commande présente exclusivement alors le premier état de signal lorsque, en contrepartie, le signal du capteur (110), lequel est associé à cette unité de rouleaux (116) donnée, présente le premier état de signal et lorsque le signal du capteur (110), lequel est associé à l'unité de rouleaux (116) placée avant cette unité de rouleaux (116) donnée, présente le deuxième état de signal,
- où la commande du processus de mouvement de l'unité de rouleaux (116) donnée comprend, en fonction du signal du capteur (110), lequel est associé à l'unité de rouleaux (116) située après cette unité de rouleaux (116) donnée, une commande du processus de mouvement de l'unité de rouleaux (116) donnée en fonction du signal de commande du module de commande (200) qui est associé à l'unité de rouleaux (116) située après cette unité de rouleaux (116) donnée.

2. Convoyeur à rouleaux (100) selon la revendication 1,
- où la commande du processus de mouvement comprend une rotation d'un ou de plusieurs rouleaux de cette unité de rouleaux (116) donnée lorsque
∘ le signal du capteur (110), lequel est associé à cette unité de rouleaux (116) donnée, présente le deuxième état de signal,
∘ le signal du capteur (110), lequel est associé à l'unité de rouleaux (116) placée avant cette unité de rouleaux (116) donnée, présente le premier état de signal, et
∘le signal du capteur (110), lequel est associé à l'unité de rouleaux (116) située après cette unité de rouleaux (116) donnée, présente le premier état de signal,
et/ou
où la commande du processus de mouvement comprend une rotation d'un ou de plusieurs rouleaux de cette unité de rouleaux (116) donnée lorsque
∘ le signal du capteur (110), lequel est associé à cette unité de rouleaux (116) donnée, présente le deuxième état de signal,
∘ le signal du capteur (110), lequel est associé à l'unité de rouleaux (116) placée avant cette unité de rouleaux (116) donnée, présente le deuxième état de signal, et
∘ le signal du capteur (110), lequel est associé à l'unité de rouleaux (116) située après cette unité de rouleaux (116) donnée, présente le premier état de signal.

3. Convoyeur à rouleaux (100) selon l'une des revendications précédentes,
- où la commande du processus de mouvement comprend un processus d'arrêt d'une rotation d'un ou de plusieurs rouleaux de cette unité de rouleaux (116) donnée lorsque
∘ le signal du capteur (110), lequel est associé à cette unité de rouleaux (116) donnée, présente le deuxième état de signal,
∘ le signal du capteur (110), lequel est associé à l'unité de rouleaux (116) placée avant cette unité de rouleaux (116) donnée, présente le deuxième état de signal, et
∘ le signal du capteur (110), lequel est associé à l'unité de rouleaux (116) située après cette unité de rouleaux (110) donnée, présente le deuxième état de signal
et/ou
- où la commande du processus de mouvement comprend un processus d'arrêt d'une rotation d'un ou de plusieurs rouleaux de cette unité de rouleaux (116) donnée lorsque
∘ le signal du capteur (110), lequel est associé à cette unité de rouleaux (116) donnée, présente le deuxième état de signal,
∘ le signal du capteur (110), lequel est associé à l'unité de rouleaux (116) placée avant cette unité de rouleaux (116) donnée, présente le premier état de signal, et
∘ le signal du capteur (110), lequel est associé à l'unité de rouleaux (116) située après cette unité de rouleaux (116) donnée, présente le deuxième état de signal,
et/ou
- où la commande du processus de mouvement comprend un processus d'arrêt d'une rotation d'un ou de plusieurs rouleaux de cette unité de rouleaux (116) donnée lorsque
∘ le signal du capteur (110), lequel est associé à cette unité de rouleaux (116) donnée, présente le premier état de signal,
∘ le signal du capteur (110), lequel est associé à l'unité de rouleaux (116) placée avant cette unité de rouleaux (116) donnée, présente le premier état de signal, et
∘ le signal du capteur (110), lequel est associé à l'unité de rouleaux (116) située après cette unité de rouleaux (116) donnée, présente le premier état de signal ou le deuxième état de signal.

4. Convoyeur à rouleaux (100) selon l'une des revendications précédentes,
- où le module de commande (200) d'une unité de rouleaux (116) donnée présente trois entrées de signal et deux sorties de signal, où les trois entrées de signal sont conçues pour
- la réception du signal du capteur (110), lequel est associé à cette unité de rouleaux (116) donnée,
- la réception du signal du capteur (110), lequel est associé à l'unité de rouleaux (116) placée avant cette unité de rouleaux (116) donnée,
- la réception du signal de commande du module de commande (200), lequel est associé à l'unité de rouleaux (116) placée après cette unité de rouleaux (116) donnée,
où les sorties de signal sont conçues pour
- la mise à disposition du signal du capteur (110), lequel est associé à cette unité de rouleaux (116) donnée, vis-à-vis de l'unité de commande, vis-à-vis de l'unité de commande de l'unité de rouleaux située après cette unité de rouleaux (116) donnée,
- la mise à disposition du signal de commande du module de commande (200), lequel est associé à cette unité de rouleaux (116) donnée, vis-à-vis de l'unité de commande, laquelle est associée à l'unité de rouleaux (116) placée avant cette unité de rouleaux (116) donnée.

5. Convoyeur à rouleaux (100) selon l'une des revendications précédentes, où le capteur (110) d'une unité de rouleaux (116) donnée est disposé avant l'unité de rouleaux (116) donnée, vu dans la direction de transport (114).

6. Convoyeur à rouleaux (100) selon l'une des revendications précédentes, où le signal d'un capteur (110) associé à une unité de rouleaux (116) peut être mis à disposition avec un déclenchement différé lorsque le signal présente le premier état de signal.

7. Convoyeur à rouleaux (100) selon la revendication 6, dans lequel
- la matière à transporter (102 ; 402) présente plusieurs bandes de roulement (120) disposées les unes derrière les autres, vu dans la direction de transport (114), où la matière à transporter (102 ; 402) peut s'appuyer et être transportée sur le convoyeur à rouleaux (100) par l'intermédiaire des bandes de roulement (120),
- le processus de mouvement et le processus d'arrêt comprennent une transmission de forces des rouleaux de l'unité de rouleaux (116) dans une zone dans l'espace de l'unité de rouleaux (116) sur la matière à transporter (102 ; 402) par l'intermédiaire des bandes de roulement (120),
- le déclenchement différé est conçu de manière que, après qu'une bande de roulement (120) individuelle parmi les bandes de roulement ait quitté la position de détection de l'unité de rouleaux (116) donnée, le premier état de signal du capteur (110) de l'unité de rouleaux (116) donnée est maintenu aussi longtemps jusqu'à ce que la bande de roulement de cette matière à transporter (102 ; 402) présente derrière cette bande de roulement individuelle pénètre dans la région prédéfinie de l'unité de rouleaux (116) donnée, laquelle peut être détectée par le capteur (110) de l'unité de rouleaux (116) donnée.

8. Convoyeur à rouleaux (100) selon la revendication 7, avec en outre une minuterie pour la mise en place du déclenchement différé sous la forme d'un décalage en temps constant.

9. Convoyeur à rouleaux (100) selon l'une des revendications précédentes, où chacune des unités de rouleaux (116) comprend un rouleau pouvant être commandé (104) par le module de commande (200) de l'unité de rouleaux (116) correspondante, où le rouleau pouvant être commandé (104) comprend un rouleau d'entraînement et/ou un rouleau de freinage.

10. Convoyeur à rouleaux (100) selon la revendication 9,
où chacune des unités de rouleaux (116) comprend en outre plusieurs premiers rouleaux porteurs (106), où, pour une unité de rouleaux (116) donnée dont les premiers rouleaux porteurs (106) sont couplés mécaniquement avec le rouleau pouvant être commandé, où, en raison du couplage mécanique, le comportement en rotation des premiers rouleaux porteurs (106) couplés est identique avec le comportement en rotation du rouleau pouvant être commandé, où le processus de mouvement et le processus d'arrêt comprennent une transmission de forces à partir des rouleaux de l'unité de rouleaux (116) dans une zone dans l'espace de l'unité de rouleaux (116) vers la matière à transporter (102 ; 402) par l'intermédiaire des bandes de roulement (120), où le rouleau pouvant être commandé (104) et les plusieurs premiers rouleaux porteurs sont conçus pour la transmission des forces.

11. Convoyeur à rouleaux (100) selon la revendication 10, dans lequel
- le processus de mouvement et le processus d'arrêt comprennent une transmission de forces à partir des rouleaux de l'unité de rouleaux (116) dans une zone dans l'espace de l'unité de rouleaux (116) vis-à-vis de la matière à transporter (102 ; 402),
- la matière à transporter (102 ; 402) présente plusieurs bandes de roulement (120) disposées les unes derrière les autres, vu dans la direction de transport (114), où la matière à transporter (102 ; 402) peut s'appuyer et être transportée sur le convoyeur à rouleaux (100) par l'intermédiaire des bandes de roulement (120),
- où, vu dans la direction de transport (114), la longueur de l'extension de la zone dans l'espace est supérieure à la distance entre deux bandes de roulement (120) voisines l'une de l'autre parmi les nombreuses bandes de roulement (120).

12. Convoyeur à rouleaux (100) selon l'une des revendications précédentes, où une surface de stockage d'une étagère de stockage est formée par le convoyeur à rouleaux (100) pour la matière à transporter (102 ; 402).

13. Convoyeur à rouleaux (100) selon l'une des revendications précédentes, où, pour une unité de rouleaux (116) donnée, le processus de mouvement et le processus d'arrêt comprennent une transmission de forces des rouleaux de l'unité de rouleaux (116) dans une zone dans l'espace de l'unité de rouleaux (116) vers la matière à transporter (102 ; 402) par l'intermédiaire d'une bande de roulement (120), où la distance du centre de la zone de l'espace de l'unité de rouleaux (116) à partir de la position de capteur du capteur (110) de cette unité de rouleaux (116), vu dans la sens de la direction de transport (114) du convoyeur à rouleaux (100), correspond à la demie longueur d'extension de la matière à transporter (102 ; 402), vue dans la direction de transport (114) du convoyeur à rouleaux (100).

14. Etagère de stockage avec une surface de stockage pour de la matière à transporter, où la surface de stockage comprend un convoyeur à rouleaux (100) selon l'une des revendications précédentes.

15. Procédé de commande d'un convoyeur à rouleaux (100) avec des unités de rouleaux (116) disposées parallèlement les unes à côté des autres pour le transport de matière à transporter, où un module de commande (200) est associé à chacune des unités de rouleaux (116)
- où un capteur (110) est associé à chacune des unités de rouleaux (116) pour la délivrance d'un signal, où le signal est dans un premier état de signal dans le cas de la présence et un deuxième état de signal dans le cas de l'absence de la matière à transporter (102 ; 402) sur une position de détection par rapport à l'unité de rouleaux (116) à laquelle est associé le capteur (110), où le procédé comprend en ce qui concerne le capteur (110) d'une unité de rouleaux (116) donnée,
∘ la mise à disposition du signal au module de commande (200) associé à cette unité de rouleaux (116) donnée,
∘ la mise à disposition du signal au module de commande (200) de l'unité de rouleaux (116) située après, laquelle est l'unité de rouleaux (116), vue dans le sens inverse à la direction de transport (114) du convoyeur à rouleaux (100), disposée immédiatement avant l'unité de rouleaux (116) donnée sur le convoyeur à rouleaux (100),
- où le procédé comprend une commande d'un processus de mouvement de rouleaux d'une unité de rouleaux (116) par un module de commande (200), où, en ce qui concerne une unité de rouleaux (116) donnée, le processus de mouvement est commandé en fonction
∘ du signal du capteur (110) lequel est associé à cette unité de rouleaux (116) donnée,
∘ du signal du capteur (110) lequel est associé à l'unité de rouleaux (116) placée avant cette unité de rouleaux (116) donnée,
∘ du signal de capteur (110) lequel est associé à l'unité de rouleaux (116) située après cette unité de rouleaux (116) donnée,
- où la commande du processus de mouvement comprend une rotation d'un ou de plusieurs rouleaux de cette unité de rouleaux (116) donnée lorsque
∘ le signal du capteur (110), lequel est associé à cette unité de rouleaux (116) donnée, présente le premier état de signal,
∘ le signal du capteur (110), lequel est associé à l'unité de rouleaux (116) placée avant cette unité de rouleaux (116) donnée, présente le deuxième état de signal et
∘le signal du capteur (110), lequel est associé à l'unité de rouleaux (116) située après cette unité de rouleaux (116) donnée, présente le premier état de signal ou le deuxième état de signal,
**caractérisé par**
∘ la mise à disposition d'un signal de commande vers le module de commande (200) de l'unité de rouleaux (116) placée avant l'unité de rouleaux (116) donnée, où le signal de commande présente exclusivement alors le premier état de signal lorsque, en contrepartie, le signal du capteur (110), lequel est associé à cette unité de rouleaux (116) donnée, présente le premier état de signal et lorsque le signal du capteur (110), lequel est associé à l'unité de rouleaux (116) placée avant cette unité de rouleaux (116) donnée présente le deuxième état de signal,
- où la commande du processus de mouvement de l'unité de rouleaux (116) donnée comprend, en fonction du signal du capteur (110), lequel est associé à l'unité de rouleaux (116) située après cette unité de rouleaux (116) donnée, une commande du processus de mouvement de l'unité de rouleaux (116) donnée en fonction du signal de commande du module de commande (200) de l'unité de rouleaux (116) située après cette unité de rouleaux (116) donnée.
